# EUROPEAN PATENT SPECIFICATION

(11) **EP 4 229 334 B1**
(45) Date of publication and mention of the grant of the patent: **11.09.2024**
(21) Application number: 21730978.0
(22) Date of filing: 11.05.2021
(51) Int. Cl.: F23G 5/04, F23G 5/08

(54) **STRUCTURAL CONFIGURATION AND METHOD FOR ENVIRONMENTALLY SAFE SOLID WASTE AND BIOMASS PROCESSING TO INCREASE THE EFFICIENCY OF POWER GENERATION AND PRODUCTION OF OTHER USEFUL PRODUCTS**
STRUKTURELLE KONFIGURATION UND VERFAHREN ZUR UMWELTSCHONENDEN FESTSTOFFABFALL- UND BIOMASSEVERARBEITUNG ZUR ERHÖHUNG DER EFFIZIENZ DER STROMERZEUGUNG UND PRODUKTION ANDERER NÜTZLICHER PRODUKTE
CONFIGURATION STRUCTURALE ET PROCÉDÉ DE TRAITEMENT ÉCOLOGIQUE DE DÉCHETS SOLIDES ET DE BIOMASSE, DESTINÉS À AUGMENTER L'EFFICACITÉ DE GÉNÉRATION D'ÉNERGIE ET DE PRODUCTION D'AUTRES PRODUITS UTILES

(30) Priority: 19.10.2020 HU 2000344
(43) Date of publication of application: 23.08.2023
(73) Proprietor: Metaplasma S.L., 33212 Gijon (ES); Int-Energia Kft., 1135 Budapest (HU); Molekula-Szeged Kft., 6750 Algyö (HU)
(72) Inventor: MAMAYENKO, Arian, 33212 Gijon Asturias (ES); POTASNYIK, Lázár Mordkovics, 1135 Budapest (HU)
(74) Representative: Kovári, Zoltán
(86) International application number: PCT/HU2021/000007
(87) International publication number: WO 2022/084703

(56) References cited:
- EP-A2- 3 420 278
- CA-A1- 2 767 030
- US-A1- 2012 070 347

## Description

The present invention relates to the method and structural configuration for environmentally safe solid waste and biomass processing to increase the efficiency of power generation and production of other useful products. In accordance with the method of the invention, this can be achieved by rapid plasma gasification of solid waste and biomass, and conversion of pyrolysis gas. Solid waste and biomass can be successfully used to generate electric power by using their energy potential and obtaining methane in the process of waste processing, while ensuring the complete utilization of carbon dioxide. The resulting electric power and useful products can be used for energetics and ecology use. In addition, materials obtained during waste processing, such as, for example, metals, basalt-like slag, purified water, potassium salts solution as potash fertilizers, as well as oxygen, can be used to produce other useful materials and marketable products. These other useful products can be successfully used in medicine, construction, agriculture and other industries.

There are known schemes of plasma installations implementing technologies where the pyrolysis gas generated as a result of thermal destruction of solid household and industrial waste is either burned with the subsequent use of high-temperature combustion products to produce steam fed to turbine generator sets to generate electric power, or pyrolysis gas, which after preliminary gas cleaning, is used as fuel for the operation of diesel or gas turbine plants that generate electric power. In addition, as a result of high-temperature destruction of solid household and industrial waste, an environmentally friendly glassy slag is formed, which can be used as a building material. There are also known technological processes and systems operating using plasma gasification and gas conversion of pyrolysis gas where, in order to improve the efficiency of processing solid household and industrial waste, various technical solutions are used, such as preliminary drying of feedstock or the introduction of additional units such as the Sabatier reactor.

For example, there is a known waste processing unit, presented in the description of patent RU2375636 (C1), in which, in the funnel 4 of the feeder 2, raw material in the form of solid hydrocarbon-containing waste is fed continuously. Under the action of the rotating screw 5, the raw material moves and compresses in the feeder 2, enters the conical channel 7, where it is additionally compressed and squeezed into the housing 1, here the required temperature is created using an electric arc (depending on the processing method, it can be in the range of 500°C... 1700°C), at which decomposition of raw materials occurs without air access. The resulting pyrolysis gas enters the jacket 9, gives off part of the heat to the raw material in the feeder, heating it, and is removed through the branch pipe 21 of the jacket 9 for further processing. The solid residue is removed from the reactor by a discharge system 19 designed specifically to the type and amount of this residue. The disadvantage of this known solution is that with increased humidity of the waste to be processed, the proposed drying system would not ensure its effective drying, which would lead to additional high energy costs during waste processing, namely, to an increase in the power consumption of the electric arc, and, accordingly, such recycling would not be effective.

A system for generating CH4 and CO from various wastes is known (patent CA2767030 (A1). A system for generating CH4 and CO from waste contains either one of the Westinghouse plasma reactors (plasma melter) or one of the Europlasma plasma reactors (plasma melter) or one of the InEnTec plasma reactors (plasma melter), two pressure swing absorbers (PSA), a water gas conversion reactor and one Sabatier reactor, as well as several types of power plants and installations supplying carbon dioxide.

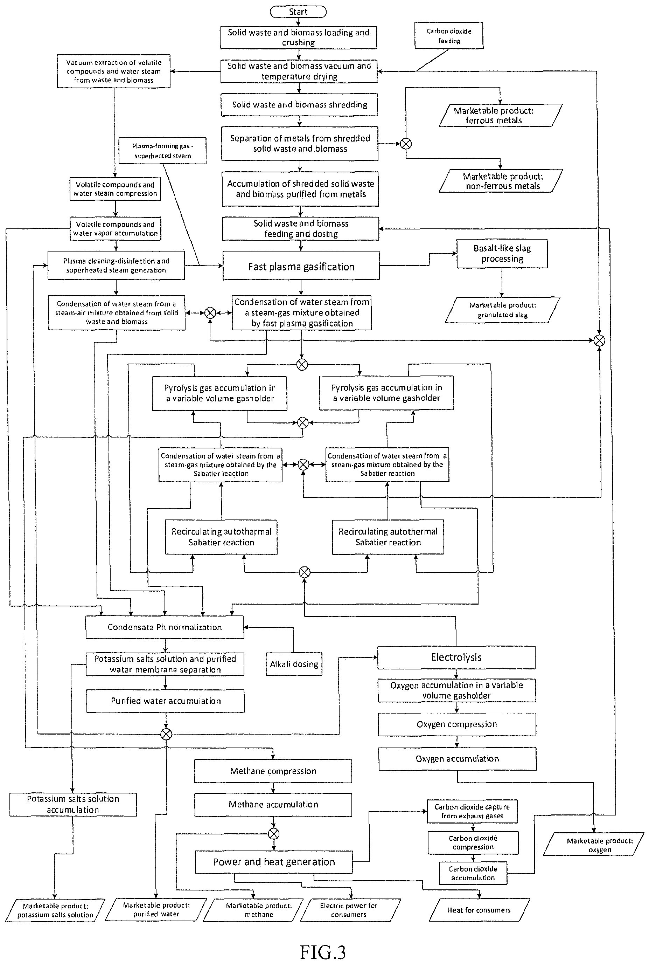

In accordance with the invention, the system is provided with a plasma melter having a feedstock input for receiving a fuel, which may be a feed waste, and a syngas output for producing a syngas having an H2 component. Additionally, a Sabatier reactor is provided having a hydrogen input for receiving at least a portion of the H2 component produced by the plasma melter, and a methane output for producing CH4. In one embodiment of the invention, there is provided a power plant having a methane input and a carbon dioxide output. A methane delivery system delivers the CH4 to the methane input of the power plant. The power plant is in some embodiments a conventional power plant and in other embodiments an O2 injected power plant. In additional embodiments, a CO2 collector is provided associated with the carbon dioxide output of the power plant. The Sabatier reactor is equipped with a carbon dioxide input and is adapted to receive input of carbon dioxide CO2 from any combination of power plants, either from a conventional power plant or from an O2 injected power plant, or from an ammonia plant, or from an H2 plant, or from an ethylene oxide plant, or from a natural gas plant, or from an ethanol plant. The plasma melter is arranged to receive at its feedstock input any combination of hazardous waste; medical waste; radioactive waste; municipal waste; coal; and algae biomass. In one embodiment of the invention, the plasma melter is a selectable one of a Westinghouse plasma melter and a Europlasma plasma melter. There is, in some embodiments, provided a pressure swing absorber (PSA) having an input for receiving the syngas from the plasma melter, and an output for providing H2 to the Sabatier reactor. In embodiments where the plasma melter is a Westinghouse plasma melter, the pressure swing absorber has a carbon monoxide output for producing CO. A power plant is provided having a carbon monoxide input, and there is further provided a carbon monoxide delivery system for delivering the CO from the Westinghouse plasma melter to the carbon monoxide input of the power plant. In embodiments of the invention where the plasma melter is a Europlasma plasma melter, the pressure swing absorber has a carbon dioxide output for producing CO2. A water gas shift reactor is arranged intermediate of the Europlasma plasma melter and the pressure swing absorber for converting syngas available at a syngas output of the Europlasma plasma melter to CO2 + H2 and thereby enhancing methane conversion in the Sabatier reactor. The disadvantage of this known solution is the need to separate the pyrolysis gas into its constituent components CO, CO2 and H2 which, accordingly, requires the installation of additional equipment that ensures the separation of the above-mentioned constituent components of the pyrolysis gas. With this method of gas conversion, no 100% CO2 utilization occurs in the Sabatier reactor (see Fig.3). The use of additional equipment for gas separation leads to its redundancy and, accordingly, increased energy and financial costs, which makes the implementation of the proposed solution ineffective and economically unprofitable.

In the patent description EP3420278 (A2) (Fig. 1A), the plasma reactor (10) includes a reaction volume (5) delimited by walling (14), a gas outlet port (19) and a melt processing unit (13), while said gas outlet port (19) limits the reaction volume (5) from the top, and said melt treatment unit (13) limits the reaction volume (5) from the bottom, and wherein - when the plasma reactor (10) is in operation - the reaction volume (5) is connected to both the gas outlet port (19) and the melt treatment unit (13) to maintain a free flow of material there through, and wherein the reaction volume (5) includes agaseous material treatment region (5C), a gasification region (5B) and a melt treatment region (5 A), the gaseous material treatment region opens directly to the gas outlet port (19), the melt treatment region (5 A) at least partially forms part of the melt treatment unit (13) and the gasification region (5B) is located between the gaseous material treatment region (5C) and the melt treatment region (5 A); a waste material supply mechanism passing through the walling (14) and opening into the gasification region (5B) of the reaction volume (5); plasma torches arranged to generate thermal plasma in each of said regions (5 A, 5B, 5C) of the reaction volume (5) separately, wherein at least one plasma torch is provided for generating the thermal plasma in each region (5 A, 5B, 5C); sensors (11, 11') arranged in said regions (5 A, 5B, 5C) of the reaction volume (5), the sensors (11, 11') are configured to monitor physical and/or chemical conditions prevailing within said regions (5 A, 5B, 5C) and to measure physical/chemical parameters representative of said conditions at given instances when the plasma reactor (10) is in operation; a data collecting and control unit, wherein said sensors (11, 11') are in data communication connection with the data collecting and control unit for transferring measurement data obtained by measurements performed by the sensors, the measurement date being representative of the instantaneous physical and/or chemical conditions prevailing within said regions (5 A, 5B, 5C) when the plasma reactor (10) is in operation.

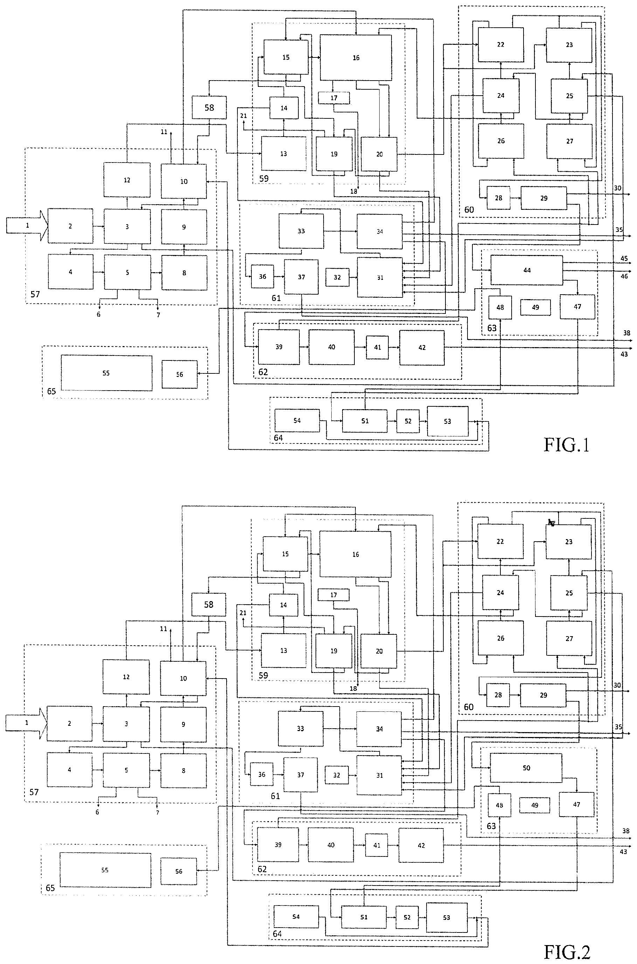

The gas treatment stage 120 is used for the adequate treatment (cooling, cleaning, etc.) of the gaseous material leaving the plasma reactor 10 (through the gas outlet port 19, see Figure 1) before the gaseous material is processed further. Said gaseous material is substantially a hot mixture (at a temperature of at least about 3000°C) of synthesis gas, metallic vapor and other contaminants. The gas treatment stage 120 basically comprises a secondary reaction volume 125, a quencher 130 and a scrubber unit 135.

The disadvantage of this known solution is that when the gas exits through the gas outlet port 19 from the plasma reactor 10, as indicated in the description of this known solution, the gaseous material is essentially a hot mixture (at a temperature of at least about 3000°C) of syngas, metal vapors and a number of other pollutants, that is, when the gas leaves the plasma reactor 10, the capture of metal vapors and small fractions of particles of the processed waste occurs, which requires additional measures in the form of afterburning, quenching and expensive purification of pyrolysis gas, which is indicated in the description of this known solutions. This leads to rise in prices of the entire waste processing and, accordingly, to an increase in the prime cost of waste processing, which makes this known technical solution for waste processing unprofitable.

Patent document US0070347 (A1) discloses a Carbon Conversion System, which system has four functional units, each unit comprising one or more zones, wherein the units are integrated to optimize the overall conversion of carbonaceous feedstock into syngas and slag. The first unit is a primary processing unit for conversion of carbonaceous feedstock into a primary off-gas and a processed feedstock comprising char. The second unit is a secondary processing unit adapted to receive the processed feedstock and convert it into a solid residue and a secondary off-gas. The third unit is a melting unit comprising sources of plasma and it vitrify the solid residue and generate a melting unit gas. The fourth unit is a reformulating unit for reformulating off-gas to a syngas in cyclonic separators. Syngas exiting the hot gas pipe consists mostly of nitrogen, carbon monoxide and hydrogen, with much lower amounts of methane and other fuel gases, no oxygen, and very small amounts of tars and particulates. The presence of ballast nitrogen in syngas significantly limits its use due to the formation of nitrogen dioxide and nitrogen oxides during its combustion in gas turbines and a decrease in LHV. For example, when generating electric power at low LHV, the efficiency of power generation is significantly reduced and emissions of hazardous substances such as nitrogen dioxide and oxides into the atmosphere are increased, which is a significant disadvantage of the present patent document. The disadvantage of the Carbon Conversion System is also that it's only outputs are a syngas and waste. Therefore, the efficiency of the system is low.

In view of the above, the aim of the invention is to eliminate the disadvantages of the known solutions and to create a structural configuration and method for environmentally safe processing of solid waste and biomass, using fast plasma gasification and gas conversion of pyrolysis gas to increase the efficiency of power generation, and production of other useful products, which can also increase the level of environmental safety of the processing and implement highly efficient, cost-effective production.

The embodiment is based on the recognition that the solid waste and biomass are loaded and crushed, then subjected to vacuum and temperature drying, as a result the dewatered and dried solid waste and biomass are shredded, the ferrous and non-ferrous metals are extracted from them and supplied as marketable products for external consumers, after that the shredded solid waste and biomass purified from metals are accumulated, then they are fed in a dosing method to the fast plasma gasification reactor, while ensuring the discharge of air excess formed during the dosing process into the atmosphere, in the fast plasma gasification reactor shredded solid waste and biomass purified from metals is subjected to fast plasma gasification, the steam-gas mixture obtained as a result of fast plasma gasification, is condensed, separating the water steam from the steam-gas mixture, and thus, the gas mixture freed from water steam, in the form of pyrolysis gas, is accumulated in turn in two variable volume gasholders; in the process of vacuum and temperature drying, the vacuum extraction of volatile compounds and water steam from solid waste and biomass are provided, the steam-air mixture and volatile compounds are compressed and accumulated, then the steam-air mixture and volatile compounds are subjected to plasma cleaning-disinfection and the superheated water steam is generated, which, as a plasma-forming gas, is supplied to the indirect arc plasma torches to the fast plasma gasification reactor for fast plasma gasification, where for indirect arc plasma torches that operate according to the scheme with "hot" cathode and anode (binary carbide compounds tungsten-tantalum or niobium-hafnium are used as materials for the manufacture of anodes and cathodes), and the steam-air mixture obtained in the process of plasma cleaning-disinfection, is condensed, separating water steam from the steam-air mixture extracted from solid waste and biomass, and the cleaned and disinfected air is released into the atmosphere; the hydrogen obtained as a result of electrolysis, as well as the pyrolysis gas from the first of two variable volume gasholders, is fed to the first of the two recirculation Sabatier reactors for the recirculating autothermal Sabatier reaction, the obtained steam-gas mixture as a result of the recirculating autothermal Sabatier reaction, containing mainly methane, is condensed, separating water steam from the steam-gas mixture, the resulting gas mixture is accumulated in the first of the two variable volume gasholders, therewith the cycle consisting of the supply of hydrogen obtained as a result of electrolysis and the supply of pyrolysis gas from the first of two variable volume gasholders to the first of the two recirculation Sabatier reactors for carrying out the recirculating autothermal Sabatier reaction, is repeated until there is a complete conversion of the gas mixture in the first of the two variable volume gasholders into methane, and the entire first gasholder is not filled with methane, therewith the content of methane in the steam-gas mixture, with each next cycle, will increase, and the total time for the conversion cycles of the gas mixture is limited and is determined by the ratio of the temperature parameters of the recirculation autothermal Sabatier reaction and the parameters of fast plasma gasification; after filling the first of the two variable volume gasholders with methane, the obtained methane from the first of the two varied volume gasholders is compressed and accumulated it in the first constant volume gasholder; at the same time with this, the hydrogen obtained as a result of electrolysis, as well as pyrolysis gas from the second of the two variable volume gasholders, are supplied on the second of the two recirculation Sabatier reactors for the recirculating autothermal Sabatier reaction, the obtained steam-gas mixture as a result of the recirculating autothermal Sabatier reaction, containing mainly methane, is condensed, separating water steam from the steam-gas mixture, the resulting gas mixture is accumulated in the second of two gasholders, therewith the cycle consisting of the supply of hydrogen obtained as a result of electrolysis and the supply of pyrolysis gas from the second of two variable volume gasholders to the second of the two recirculation Sabatier reactors for conducting a recirculating autothermal Sabatier reaction, which is repeated until there is a complete conversion of the gas mixture in the second of the two variable volume gasholders into methane and the entire second gasholder is filled with methane, while the methane content in the steam-gas mixture will increase with each next cycle, moreover, the total time of the conversion cycles for the gas mixture into methane is limited and is determined by the ratio of the temperature parameters of the recirculating autothermal Sabatier reaction and the parameters of fast plasma gasification, after filling with methane the second of the two variable volume gasholders, the methane obtained from the second of the two variable volume gasholders is compressed and accumulated in the first constant volume gasholder, at the same time with this, the gas conversion cycles for pyrolysis gas and gas mixture into methane using a recirculating autothermal Sabatier reaction repeat in the first recirculating autothermal Sabatier reactor and then repeat in the second recirculating autothermal Sabatier reactor, thus using recirculating Sabatier reaction the continuity of the technological process of the conversion of pyrolysis gas to methane is ensured; condensate obtained during condensation of water steam from a steam-gas mixture obtained during rapid plasma gasification, condensate obtained during condensation of water steam from a steam-air mixture extracted from solid waste and biomass, condensate obtained during condensation of water steam from a steam-gas mixture obtained during the recirculating autothermal Sabatier reaction in the first recirculation Sabatier reactor, condensate obtained during the condensation of water steam from the steam-gas mixture obtained during the recirculating autothermal Sabatier reaction in the second recirculation Sabatier reactor, as well as the condensate formed during the accumulation of the steam-air mixture and volatile compounds, is normalized by pH by means of dosing alkali, after there, membrane separation of the obtained normalized condensate into a solution of potassium salts and purified water is ensured, the resulting potassium salts solution is fed into a storage tank and accumulated, and then, as marketable product potassium fertilizer, is supplied to external consumers, the purified water is also accumulated, then part of the purified water is supplied for electrolysis, another part of the purified water is supplied to ensure plasma cleaning-disinfection and generation of superheated water steam, and the remaining third part, as a marketable product, is supplied to external consumers; vacuum and temperature drying are provided due to the extraction of heat obtained during condensate cooling during condensation of water steam from a steam-gas mixture during fast plasma gasification, from a steam-air mixture extracted from solid waste and biomass, from a steam-gas mixture obtained during the recirculating autothermal Sabatier reaction in the first recirculating Sabatier reactor and during the condensation of water steam from the steam-gas mixture obtained during the recirculating autothermal Sabatier reaction in the second recirculating Sabatier reactor, as well as due to the extraction of heat generated in the process of plasma cleaning-disinfection of the steam-air mixture and volatile compounds, while all these heat sources are combined into a single closed cooling circuit with heat recovery for vacuum and temperature drying; the oxygen obtained as a result of electrolysis is accumulated in the third variable volume gasholder, the accumulated oxygen is compressed and accumulated in the second constant volume gasholder, and then, as a marketable product, it is supplied to external consumers; the accumulated methane in the first constant volume gasholder is used as follows: part of the methane accumulated in the first constant volume gasholder is used as a marketable product and supplied to external consumers, and the other part of the methane accumulated in the first constant volume gasholder is used to generate electric power and heat; therewith, part of the generated electric power is supplied for own needs, and the other part of the generated electric power and heat is supplied to external consumers; carbon dioxide emitted from the exhaust gases generated during the production of electric power and heat is compressed, accumulated and directed to restrict air access when solid waste and biomass are fed in the dosing method to ensure fast plasma gasification; in the absence of the need to generate electric power and heat, electric power for own needs is produced from part of the accumulated methane in the first constant volume gasholder, and the other part of the accumulated methane in the first constant volume gasholder is used as a marketable product and supplied to external consumers; during fast plasma gasification, melting occurs and a basalt-like slag is formed, which are processed to produce granular slag, and the resulting granular slag, as a marketable product, is supplied to external consumers, thus the objectives of the structural configuration and method of the invention are achieved.

The nature of the invention is a structural configuration and a method for environmentally safe processing of waste and biomass using plasma gasification and gas conversion of pyrolysis gas to increase the efficiency of power production and production of other useful products.

The invention provides a structural configuration in accordance with claim 1.

Preferred implementations of the structural configuration of the invention are described in claims 2-9.

The subject-matter of the invention is also a method for environmentally safe waste and biomass processing in accordance with claim 10

Preferred embodiments of the method of the invention are described in claims 11-17.

The implementation of the invention is shown in more detail in the drawings, namely:
Figure 1 shows a structural configuration of the subject-matter of invention,
Figure 2 shows another preferred embodiment of the structural configuration of the invention in the absence of the need for electric power and heat generation,
Figure 3 shows the process flowchart of the embodiment of the environmentally safe method of the invention,
Figure 4 shows the process flowchart of another embodiment of the environmentally safe method of the invention in the absence of the need for electric power and heat generation,
Figure 5 shows one of the examples of the embodiment of the solid waste and biomass dosing system for the solid waste and biomass preparation unit and one of the examples of the embodiment of the fast plasma gasification reactor of the fast plasma gasification unit in the implementation of plasma gasification based on the indirect arc plasma torches,
Figure 6 shows one of the examples of the embodiment of a solid waste and biomass dosing system for a solid waste and biomass preparation unit and another embodiment of a fast plasma gasification reactor of a fast plasma gasification unit in the implementation of plasma gasification based on the inductively coupled plasma,
Figure 7 shows one of the examples of the embodiment of the air-plasma steam generator system of the fast plasma gasification unit.

As can be seen in Figures 1 and 2, the invention has nine main units, namely: a solid waste and biomass preparation unit 57, a heat recovery cooling unit 58, a fast plasma gasification unit 59, a gas conversion unit 60, a condensate processing unit 61, a hydrogen-oxygen unit 62, an electric power generation unit 63, a carbon dioxide capture unit 64 and a process control and monitoring unit 65 (The process control and monitoring unit 65 has two-way communications with other units in the configuration, however, these communications are not shown in the drawing for convenience of illustration and clarity).

Figure 3 shows a process flowchart of the embodiment of an environmentally safe method of the invention, which is characterized in the following stages of operation:
- incoming solid waste and biomass to be processed are loaded, crushed,
- crushed solid waste and biomass are subjected to vacuum and temperature drying,
- dehydrated and dried solid waste and biomass are shredded,
- ferrous and non-ferrous metals are extracted from shredded solid waste and biomass and supplied as marketable products for external consumers,
- shredded solid waste and biomass cleaned from metals are accumulated,
- the accumulated shredded solid waste and biomass cleaned from metals are fed in a dosing method to the fast plasma gasification reactor 16, while ensuring the release of excess air formed during the dosing process into the atmosphere,
- in the fast plasma gasification reactor 16 the shredded solid waste and biomass are subjected to fast plasma gasification,
- the steam-gas mixture obtained as a result of fast plasma gasification, is condensed, separating the water steam from the steam-gas mixture,
- the gas mixture freed from water steam is accumulated in the form of pyrolysis gas in two variable volume gasholders 22 and 23 in turn,
- in the process of vacuum and temperature drying, volatile compounds and water steam are provided vacuum extraction from solid waste and biomass,
- the steam-air mixture and volatile compounds are compressed and accumulated,
- the accumulated steam-air mixture and volatile compounds are subjected to plasma cleaning-disinfection and superheated steam is generated, which, as a plasma-forming gas, is fed to the indirect arc plasma torches into the fast plasma gasification reactor 16 for fast plasma gasification,
- all indirect arc plasma torches operate according to the scheme with "hot" cathode and anode manufactured from binary carbide compounds tungsten-tantalum or niobium-hafnium,
- the steam-air mixture obtained in the process of plasma cleaning-disinfection is condensed, separating the water steam from the steam-air mixture extracted from solid waste and biomass, and the cleaned and disinfected air is released into the atmosphere;
- the hydrogen obtained as a result of electrolysis, as well as the pyrolysis gas from the first of two variable volume gasholders 22, are fed to the first of two recirculation Sabatier reactors 26 to carrying out a recirculating autothermal Sabatier reaction,
- the steam-gas mixture obtained as a result of the recirculating autothermal Sabatier reaction, containing mainly methane, is condensed, separating the water steam from the steam-gas mixture,
- the obtained gas mixture is accumulated in the first of the two variable volume gasholders 22, while the cycle consisting of feeding hydrogen obtained as a result of electrolysis and of feeding pyrolysis gas from the first of the two variable volume gasholders 22 to the first of the two recirculation Sabatier reactors 26 to carry out the recirculating autothermal Sabatier reaction, is repeated until there is a complete conversion of the gas mixture located in the first of the two variable volume gasholders 22 into methane and the entire first gasholder 22 will not be filled with methane, while the methane content in the steam-gas mixture will increase with each successive cycle , and the total time of the gas mixture conversion cycles is limited and is determined by the ratio of the temperature parameters of the recirculating autothermal Sabatier reaction and the parameters of fast plasma gasification;
- after filling the first of the two variable volume gasholders 22 with methane, the methane obtained from the first of the two variable volume gasholders is compressed and accumulated in the constant volume gasholder 29,
- at the same time, hydrogen obtained as a result of electrolysis, as well as pyrolysis gas from the second of the two variable volume gasholders 23, are fed to the second of the two recirculation Sabatier reactors 27 to carry out a recirculating autothermal Sabatier reaction,
- the steam-gas mixture obtained as a result of the recirculating autothermal Sabatier reaction, containing mainly methane, is condensed, separating the water steam from the steam-gas mixture,
- the obtained gas mixture is accumulated in the second of the two variable volume gasholders 23, wherein the cycle consisting of feeding hydrogen obtained as a result of electrolysis and of feeding pyrolysis gas from the second of two variable volume gasholders 23 to the second of the two recirculation Sabatier reactors 27 to carry out the recirculating autothermal Sabatier reaction, is repeated until there is a complete conversion of the gas mixture located in the second of the two variable volume gasholders 23 into methane and the entire second gasholder 23 will not be filled with methane, wherein the methane content in the steam-gas mixture will increase with each successive cycle, and the total time of the gas mixture conversion cycles is limited and is determined by the ratio of the temperature parameters of the recirculating autothermal Sabatier reaction and the parameters of fast plasma gasification,
- after filling the second of two variable volume gasholders 22 with methane, the methane obtained from the second of the two variable volume gasholders is compressed and accumulated in the constant volume gasholder 29,
- at the same time, the cycles of the pyrolysis gas and the gas mixture conversion into methane using the recirculating autothermal Sabatier reaction are repeated in the first recirculation Sabatier reactor 26 and then repeated in the second recirculation Sabatier reactor 27, thus, using the recirculating autothermal Sabatier reaction, the continuity of the technological process of converting pyrolysis gas to methane is ensured;
- condensate obtained during condensation of water steam from a steam-gas mixture obtained during fast plasma gasification, condensate obtained during condensation of water steam from a steam-air mixture extracted from solid waste and biomass, condensate obtained during condensation of water steam from the steam-gas mixture obtained during the recirculating autothermal Sabatier reaction in the first recirculation Sabatier reactor 26, condensate obtained during the condensation of water steam from the steam-gas mixture obtained during the recirculating autothermal Sabatier reaction in the second recirculation Sabatier reactor 27, as well as the condensate formed during the accumulation of the steam-air mixture and volatile compounds, are pH-normalized using alkali dosing,
- membrane separation of the obtained normalized condensate into a potassium salts solution and cleaned water are ensured,
- the obtained potassium salts solution is fed into a storage tank and accumulated, and as potassium fertilizers - marketable products are supplied to external consumers,
- the cleaned water is accumulated, then part of the cleaned water is supplied for electrolysis, the other part of the cleaned water is supplied to ensure plasma cleaning-disinfection and generation of superheated steam, and the remaining third part, as a marketable product, is supplied to external consumers,
- vacuum and temperature drying is provided due to the extraction of heat obtained during condensate cooling during condensation of water steam from the steam-gas mixture obtained during fast plasma gasification, from the steam-air mixture extracted from solid waste and biomass, from the steam-gas mixture obtained during the recirculating autothermal Sabatier reaction in the first recirculation Sabatier reactor 26 and during the recirculating autothermal Sabatier reaction in the second recirculation Sabatier reactor 27, as well as due to the extraction of heat generated in the process of plasma cleaning-disinfection of the steam-air mixture and volatile compounds, wherein all these heat sources are combined into a single closed cooling loop with heat recovery for vacuum and temperature drying,
- the oxygen obtained as a result of electrolysis is accumulated in the third variable volume gasholder 40,
- the accumulated oxygen in the third variable volume gasholder 40 is compressed and accumulated in the second constant volume gasholder 42, and then, as a marketable product, is supplied to external consumers,
- the accumulated methane in the first constant volume gasholder 29 is used as follows: part of the methane accumulated in the first constant volume gasholder 29 is used as a marketable product and is supplied to external consumers, and the other part of the methane accumulated in the first constant volume gasholder 29 is used for electric power and heat generation, wherein part of the generated electric power is supplied for own needs, and the other part of the generated electric power and heat is supplied for external consumers,
- carbon dioxide captured from the exhaust gases formed during the electric power and heat generation is compressed, accumulated and directed to restrict air access when solid waste and biomass are fed in the dosing method into the fast plasma gasification reactor 16 to ensure fast plasma gasification,
- during fast plasma gasification, melting occurs, and a basalt-like slag is formed, which is processed to produce granular slag,
- the obtained granulated slag, as a marketable product, is supplied to external consumers.

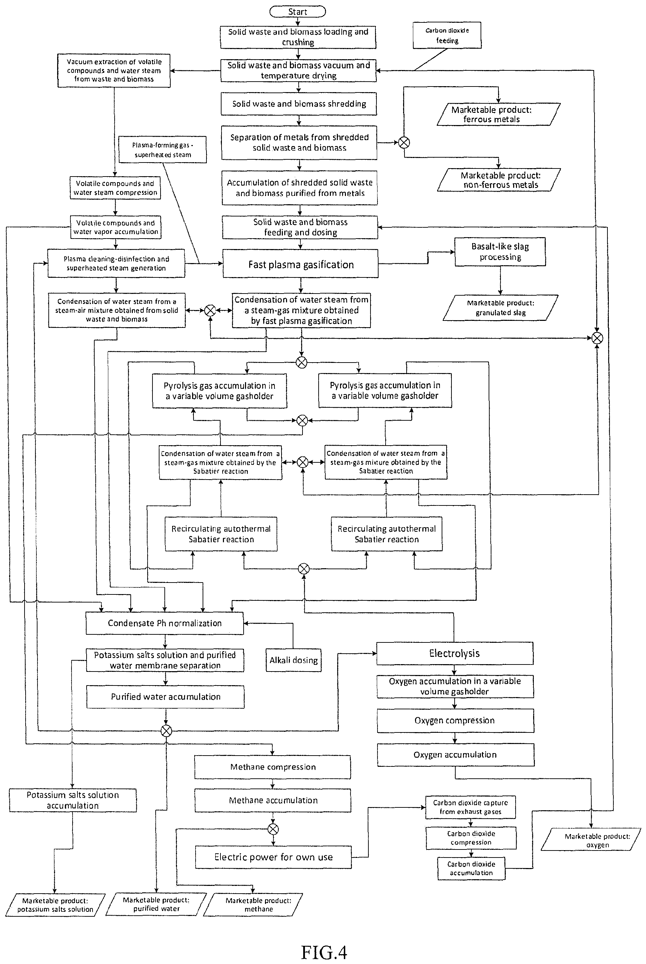

Fig. 4 shows a process flowchart of another embodiment of the environmentally safe method of the invention, which is different from the process flowchart of Fig. 3, which consists in the fact that in the absence of the need to generate electric power and heat, electric power for own needs is produced from part of the accumulated methane in the first constant volume gasholder 29, and the other part of the methane accumulated in the first constant volume gasholder 29 is used as a marketable product and supplied to external consumers.

The structural configuration of the invention works as follows:
The structural configuration of the invention is provided with three main interconnected technological processes operates as follows:
- technological process of solid waste and biomass preparation and related technological processes,
- technological process of fast plasma gasification and related technological processes,
- technological processes of condensation, water treatment and gas conversion and related technological processes.

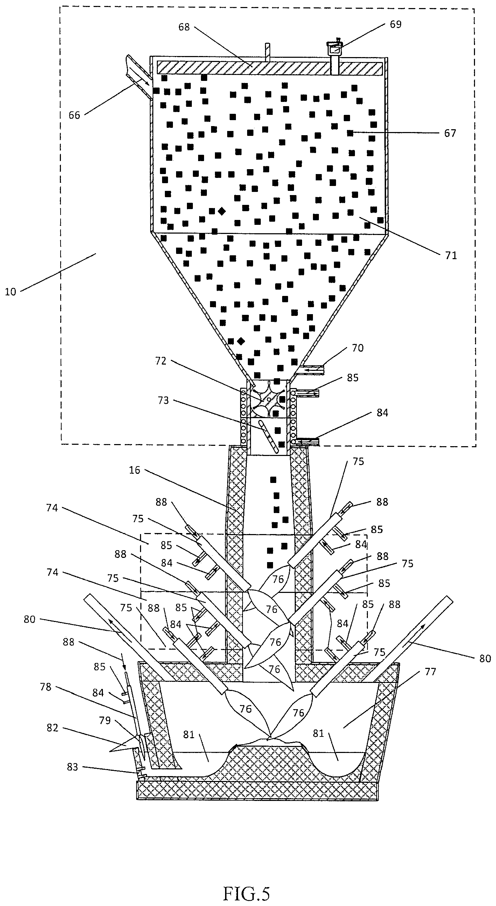

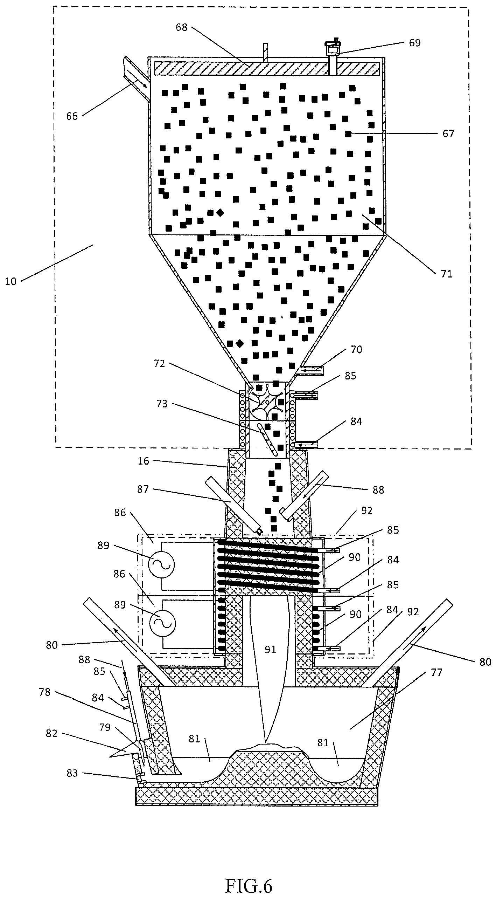

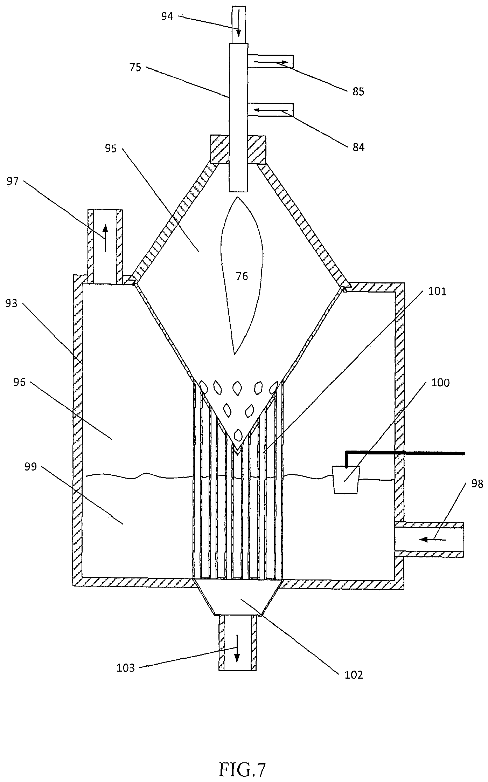

In accordance with one of the embodiments of the structural configuration of the invention, the technological process for the preparation of solid waste and biomass and related technological processes, as well as equipment implementing the operation of these technological processes, operate as follows. As shown in Fig. 1, solid waste and biomass entering the receiving area - at the solid waste and biomass input 1 - are fed to the solid waste and biomass loading and crushing system 2, where they are crushed to a fraction of 10 - 30 mm required for the next technological stage - vacuum drying. The vacuum and temperature drying system 3 is a horizontal cylindrical vacuum chamber with hemispherical lids opening on both sides and equipped with an inside conveyor belt for loading solid waste and biomass. The system housing is made double-walled with corresponding stiffeners and constitutes a cooling jacket of technological water coming from the heat recovery cooling unit 58 - a combined cooling system for all systems of the structural configuration of the invention and simultaneous heating of solid waste and biomass in the process of vacuum and temperature drying. Thus, heat recovery is performed in the heat recovery-cooling unit 58 and the total energy costs for the preparation of solid waste and biomass are reduced. The vacuum pump 12 provides the creation of a vacuum and removal of moisture, odors and volatile compounds from solid waste and biomass. Further, the air obtained from the vacuum pump 12, with a high content of water steam and volatile compounds, is supplied to the compressor 13, compressed and supplied to the high-pressure receiver 14, where partial condensation of water steam occurs. The condensate from the high-pressure receiver 14 is sent to the condensate normalization system 31. The compressor 13 also has an input for capturing atmospheric air to maintain a constant pressure in the receiver 14, since the vacuum pump 12 operates in intermittent mode and does not provide the necessary air volume to maintain the pressure in the high-pressure receiver 14. Condensate from the high-pressure receiver 14 is periodically removed and fed to the condensate normalization system 31. The steam-air mixture and volatile compounds from the high-pressure receiver 14 are supplied to the input 94 of the air-plasma steam generator 15 as a plasma-forming gas for the indirect arc plasma torch 75 of the air-plasma steam generator 15. The cleaned and disinfected steam-air mixture is fed from the output 103 of the air-plasma steam generator 15 to the first condenser 19, where water steam condenses, the cleaned and disinfected air is released into the atmosphere 21 and further condensate is fed into the condensate normalization system 31. Thus, the air-plasma steam generator 15 simultaneously performs three functions: the first function is plasma cleaning and air disinfection, the second function is to generate superheated steam for the plasma torches 75 of the fast plasma gasification reactor 16 operation, and the third function is to condense water steam and obtain significant volumes of technological water for the entire production process of the structural configuration of the invention. The layout of the plasma steam generator 15 is shown in figure 7. Dehydrated and dried solid waste and biomass from the vacuum and temperature drying system 3 are fed to the solid waste and biomass shredding system 4, where they are shredded to a fraction of 1 - 3 mm to ensure further possibility of maximum separation of metals and fast plasma gasification with minimum energy costs. From the output of the solid waste and biomass shredding system 3, the shredded waste and biomass are fed to the metal separation system 5, where the separation and accumulation of ferrous metals takes place, which are fed to the output of marketable products of ferrous metals 6 for supply to external consumers, as well as the separation and accumulation of non-ferrous metals that are supplied to the output of marketable products of non-ferrous metals 7 for supply to external consumers. From the output of the metal separation system 5, the shredded solid waste and biomass are fed to the shredded waste and biomass storage tank 8. From there the shredded solid waste and biomass feeding system 9 provides a periodic supply of shredded solid waste and biomass to the solid waste and biomass dosing system 10. An example of the implementation of this system is shown in Fig. 5 and Fig. 6. The shredded solid waste and biomass 67 are fed to the dosing system storage tank 71, to the shredded solid waste and biomass input 66, where they are compacted by the dosing system forcer 68, to reduce the amount of air in the dosing system storage tank 71 and, at the same time, the air is released into the atmosphere through the air valve 69. Through the carbon dioxide input 70 of the solid waste and biomass dosing system 10, a small dose of carbon dioxide is supplied to displace the remaining air from the shredded solid waste and biomass 67, thereby limiting the access of air when solid waste and biomass are fed in the dosing method into the fast plasma gasification reactor 16. The presence of carbon dioxide in the dosing system storage tank 71 provides fire protection against ignition during dosing of shredded solid waste and biomass. Further, this dose of carbon dioxide is completely utilized together with the shredded solid waste and biomass in the fast plasma gasification reactor 16. The dosing system doser 72 is of blade type (it can be of another type, depending on the location of the storage tank 71) and the dosing system output gate 73 provides continuous supply of shredded solid waste and biomass 67 to the plasma gasification zone of the fast plasma gasification reactor 16, protection from temperature effects of plasma infrared radiation and the penetration of superheated steam and pyrolysis gas into the storage tank 71.

In accordance with one of the embodiments of the structural configuration of the invention, the technological process for the fast plasma gasification and related technological processes, as well as equipment implementing the operation of these technological processes, operate as follows. Fast plasma gasification of the organic part of shredded solid waste and biomass is ensured by the passage of all particles of shredded solid waste and biomass through a layer of water-steam plasma with a temperature of 6000-15000°C, due to which their complete molecular destruction occurs, as well as the destruction of all gases CₓH_{y} to C + H₂ and the conversion of free carbon by water steam in accordance with the formula C + H₂O = CO + H₂ in the complete absence of air access, which excludes the formation of furans, dioxins, nitrogen oxides and other environmentally hazardous compounds. The pyrolysis gas is mixed with superheated steam and thereby any unwanted chemical reactions due to the high dynamic viscosity of the superheated steam are safely prevented. The examples of the embodiments of fast plasma gasification reactors implementing the abovementioned process are shown in Fig. 5 and Fig. 6.

An example of one embodiment of a fast plasma gasification reactor 16 using indirect arc plasma torches 75 is shown in Fig. 5. The upper part of the fast plasma gasification reactor 16 is built on a cascade principle and consists of plasma gasification plasma torch modules 74. Each module consists of at least two indirect arc plasma torches 75 located at an angle relative to the vertical axis of the fast plasma gasification reactor 16, and forms one gasification cascade. Such arrangement makes it possible to increase the productivity of the fast plasma gasification reactor 16 by adding gasification cascades 74 without changing the design of the entire reactor unit. The indirect arc plasma torches 75 tilt ensures the excess pressure in the lower part of the fast plasma gasification reactor 16 and a reduced pressure zone under the dosing system output gate 73, which excludes the penetration of the steam-gas mixture into the dosing system output gate 73. Complete gasification of the organic part of the shredded solid waste and biomass is ensured by picking up all particles by the water steam plasma jet 76 of the first indirect arc plasma torch 75 of the upper plasma gasification cascade 74 and feeding them into the hottest zone of water steam plasma output of the subsequent indirect arc plasma torch 75. Thus, the trajectory of the shredded solid waste and biomass particles becomes zigzag and the time of their passage through the plasma gasification zone increases, which ensures their complete thermal destruction and fast plasma gasification. The inorganic components of the shredded solid waste and biomass enter the lower part of the fast plasma gasification reactor 16, where they are melted, and the slag melt 81 is accumulated in the slag bath 77. Slag bath 77 is made of a lining and its design provides melting of inorganic particles on the surface of the working table of the slag bath, the slag melt flowing off and accumulation in the perimeter zone of the slag bath 77. Thus, the complete melting of the shredded solid waste and biomass inorganic components is ensured, their falling onto the surface of the slag melt is excluded, as well as their coking, capsulating, splashing of the slag melt and contamination of the inner lining of the plasma reactor and its other components.

The slag melt is discharged through the overflow lip of the molten slag draining system 82. The slag heating plasma torch 78 provides continuous heating of the molten slag draining system 82, and also allows to regulate the slag drainage by changing the pressure of the plasma torch 79 on the surface of the slag melt, thus providing both the adjustment of the slag level in the slag bath 77 and the frequency of slag drainage. Thus the obtained chemically resistant slag melt suitable for use as a building material (according to the IAEA ISO 6961-82 procedure, the rate of leaching of Na +ions was (2-3)*10⁻⁶ g/cm² and the rate of leaching of heavy metals was about 10⁻⁷ g/cm²), which is fed through the molten slag draining system 82 into the slag collecting and granulating system 17, where it is collected and granulated slag is produced, which at the output 18, is supplied as a marketable product to external consumers.

The steam-gas mixture output 80 is located below the plasma gasification plasma torch modules 74, and thus the contact of the steam-gas mixture with particles of solid waste and biomass is excluded, as well as its contamination.

All plasma torches 75 and 78 of the fast plasma gasification reactor 16 through the cooling inputs 84 and cooling outputs 85 are united by a single cooling system of the heat recovery cooling unit 58, the heat from which is recovered during the drying of solid waste and biomass in the vacuum and temperature drying system 3. All indirect arc plasma torches 75 and 78 operate according to the scheme with "hot" cathode and anode manufactured from binary carbide compounds tungsten-tantalum or niobium-hafnium. Their cooling is carried out mainly due to the plasma-forming gas in the form of superheated steam supplied to the plasma torches inputs 88. Due to the use of binary carbide compounds in the manufacture of cathodes and anodes of the plasma torches, significant advantages are obtained, namely, an increase in the operating temperature of cathodes and anodes, an increase in the current density in the plasma-forming gas, a significant increase in the efficiency of plasma torches and their durability, and the elimination of the formation and dropout of condensate on the plasma torches' live parts, as well as an easy start-up on water steam without the need to add air or other gases as plasma-forming ones.

An example of another embodiment of the fast plasma gasification reactor using inductively coupled plasma is shown in Fig. 6. Structurally and functionally, a fast plasma gasification reactor using inductively coupled plasma is similar to the above example of one of the embodiments of a fast plasma gasification reactor using indirect arc plasma torches. The difference lies in the method of forming a plasma jet for shredded solid waste and biomass gasification. At the same time, the principle of cascade configuration of the plasma gasification process is preserved, as well as the identity of the plasma gasification induction modules 86 to increase the productivity of the fast plasma gasification reactor 16. The plasma gasification induction module 86 consists of a 27-54 MHz high-frequency generator 89 feeding the inducer 90, which is integrated into the module lining or wound over it. The inducer 90 is made of a copper water-cooled pipe and through the cooling inputs 84 and the cooling outputs 85 is connected to a single cooling system of the heat recovery cooling unit 58, the heat from which is recovered when drying solid waste and biomass in the vacuum and temperature drying system 3. All plasma gasification induction modules 86 are equipped with a high-frequency electromagnetic radiation protection shield 92. Plasma-forming gas, or a superheated steam, is supplied to input 88, which is structurally made in the form of one or more injectors to provide a symmetrical shape of the plasma jet of the inductively coupled plasma. The tilting of injectors about the vertical axis of the fast plasma gasification reactor 16 provides the stretching of the inductively coupled plasma jet 91 downward, beyond the inducer 90 limits and creates a reduced pressure zone under the dosing system output gate 73, thereby excluding any penetration of the steam-gas mixture into the dosing system output gate 73. The plasma initialization electrode 87 is used to initialize the plasma jet in the upper plasma gasification induction module 86 at the initial start-up. Plasma initialization is carried out by extending the hard-alloy plasma initialization electrode insert 87 into the inside the inducer 90, then heating it up in the high-frequency electromagnetic field of the inducer 90 and forming a plasma layer of superheated steam around it. When extracting the hard-alloy plasma initialization electrode insert 87, the plasma torch is maintained due to the high-frequency electromagnetic field inside the inducer 90 and the supply of superheated steam. The complete gasification of organic components of shredded solid waste and biomass is provided due to their deceleration by an electromagnetic field and steam plasma ions in an inductively coupled plasma jet 91.

In accordance with one of the embodiments of the structural configuration of the invention, the technological process of condensation, water treatment and gas conversion, and related technological processes, as well as equipment implementing the operation of these technological processes, operate as follows. From the steam-gas mixture output 80 of the fast plasma gasification reactor 16, the steam-gas mixture is fed to the input of the second condenser 20, where it is cooled, and water steam condenses in the form of an acidic condensate. Thus, the drying and cleaning of pyrolysis gas from water-soluble acidic components of pyrolysis gas, such as HCl and others, depending on the morphological composition of shredded solid waste and biomass, as well as recovery and return of process water for reuse, is carried out. From the second output of the second condenser 20, the acidic condensate is fed to the third input of the condensate normalization system 31, where condensates are accumulated and acidically Ph-normalized using a dosed supply of potassium hydroxide KOH from the alkali doser 32 connected to the sixth input of the condensate normalization system 31. As a result of the neutralization reaction, an aqueous solution of potassium salts is formed. From the condensate normalization system output 31, the water-salt solution is fed to the potassium salts solution and cleaned water membrane separation system input 33, where the water-salt solution is separated into pure water and an aqueous concentrated solution of potassium salts using reverse-osmosis membranes. The cleaned water is supplied to the cleaned water storage tank 34, and an aqueous concentrated potassium salts solution is fed through the potassium salts solution feeding system 36 into the potassium salts solution storage tank 37 and from it, through the potassium salts solution output 38, is supplied as potassium fertilizers - a marketable product - to external consumers.

Pyrolysis gas, from the first output of the second condenser 20, is fed to the first variable volume gasholder 22, where the pyrolysis gas begins to accumulate with a slight excess pressure, slightly above atmospheric. At the same time, the pyrolysis gas from the first output of the first variable volume gasholder 22 is supplied to the first input of the first recirculation Sabatier reactor 26. The recirculation Sabatier reactors 26 and 27 are completely identical and consist of chambers filled with a catalyst (catalytic loading) NiAl₂O₃ providing separation of gas streams, which are equipped with electric heaters to provide initial heating to a temperature of 300-350°C and create conditions for the start of gas conversion chemical reactions according to the formulas:

CO₂ + 4H₂ = CH₄ + 2H₂O and CO + 3H₂ = CH₄ + H₂O

The simultaneous and equilibrium behavior of the pyrolysis gas hydrogenation and methanation reactions is ensured by a variable-speed recirculating gas pump pumping the pyrolysis gas through the catalyst (catalytic loading). Since both reactions are weakly exothermic, further automatic maintenance of the catalyst temperature is carried out by varying the rate of pumping the gas mixture through the catalyst and switching off the forced heating of the catalyst. Thus, the maintenance of the recirculating autothermal Sabatier reaction is carried out. To ensure the complete conversion of CO and CO₂ into methane and water, an electrolyzer 39 is introduced into the technological process, from the second output of which hydrogen is supplied to the second inputs of the recirculation Sabatier reactors 26 and 27, depending on which of them is active, at the moment of the technological cycle. This is necessary both to maintain the superstoichiometric value of hydrogen for the complete conversion of the pyrolysis gas to methane and water, and to ensure periodic recovery of the catalyst (catalytic loading) in an environment of pure hydrogen at temperatures of 500-600°C. Oxygen obtained from electrolyzer 39 as a result of water electrolysis is accumulated in the third variable volume gasholder 40 and through the compression system 41 is supplied to the second constant volume gasholder 42, and then, through the oxygen output 43, oxygen, as a marketable product, is supplied to external consumers. From the output of the first recirculation Sabatier reactor 26, the steam-gas mixture is fed to the third condenser 24, where the steam-gas mixture is cooled, and water steam is condensed. The obtained condensate is fed to the condensate normalization system 31. Condensers 24 and 25 are connected to a single cooling system of the heat recovery cooling unit 58. The gas mixture, consisting of pyrolysis gas and methane obtained during the Sabatier reaction, is returned from the first output of the condenser 24 to the first variable volume gasholder 22, where the gas mixture is mixed with the accumulated pyrolysis gas coming from the fast plasma gasification reactor 16 and then again from the first variable volume gasholder 22 is fed to the input of the first recirculation Sabatier reactor 26 and the cycle is repeated. Thus, the first variable volume gasholder 22 is a buffer and storage tank at the same time. In the process of pyrolysis gas accumulation in a variable volume gasholder, it is quickly filled with pyrolysis gas, which has a volume several times larger than methane and, at the same time, a gas mixture consisting of a mixture of pyrolysis gas and methane is taken from a variable volume gasholder, and conversion of the pyrolysis gas into methane and its return to a variable volume gasholder takes place. With this technological solution, the completely independent operation of both the fast plasma gasification reactor 16 and the recirculation Sabatier reactor 26 are realized. When the first variable volume gasholder is completely filled with the gas mixture, the output of the pyrolysis gas coming from the fast plasma gasification reactor 16 is switched to the second variable volume gasholder 23, where it is filled with pyrolysis gas and the second recirculation Sabatier reactor 27 which operates with the second variable volume gasholder 23 is put into operation. At the same time, the operation of the recirculation Sabatier reactor 26 continues until the conversion of pyrolysis gas to methane in the first variable volume gasholder 22 is complete. At low concentrations of pyrolysis gas in the gas mixture of the first variable volume gasholder 22, maintaining the recirculating autothermal Sabatier reaction becomes impossible and at this moment the electric heater of the catalytic loading of the first recirculating Sabatier reactor 26 is switched on, which maintains the optimum temperature of the catalytic loading until the process of complete conversion of the gas mixture into methane is completed. The end of the conversion process is evidenced by both the readings of the gas analyzer and the termination of condensation of water steam in the third condenser 24. At the end of the gas conversion cycle, methane from the first variable volume gasholder 22 through the compression system 28 is supplied under high pressure to the first constant volume gasholder 29. The operation of the second variable volume gasholder 23, the second recirculation Sabatier reactor 27 and the fourth condenser 25 are similar to the above-described process. The alternate filling of variable volume gasholders with pyrolysis gas and a continuous cycle of the recirculating autothermal Sabatier reaction in both variable volume gasholders ensures the continuity of the entire technological process. At the end of the gas conversion cycle in the second variable volume gasholder 23, methane through the compression system 28 is supplied under high pressure to the first constant volume gasholder 29, and then the cycle is repeated.

The accumulated methane in the first constant volume gasholder 29 is used as follows: part of the methane accumulated in the first constant volume gasholder 29 is used as a marketable product and through the methane output 30 is supplied to external consumers, and the other part of the methane accumulated in the first constant volume gasholder 29 is used for electric power and heat generation. For this purpose, methane from the first constant volume gasholder 29 is supplied as fuel gas to the electric power and heat generation system 44 of the electric power and heat generation unit 63. The electric power and heat generating system 44 can be made either in the form of a gas engine electric power station operating in cogeneration mode or in the form of a gas turbine electric power station operating in a cogeneration mode or in a combined cycle. During operation of the electric power and heat generating system 44, the exhaust gases generated during the operation of either a gas engine electric power station or a gas turbine electric power station are cooled in an exhaust gas cooling system 47 and supplied to the carbon dioxide capture system 51 of the carbon dioxide capture unit 64. As one of the embodiments of the carbon dioxide capture system 51, the carbon dioxide absorption and desorption method can be applied to the carbon dioxide capture system 51. Exhaust gases, after carbon dioxide removed, are directed to the exhaust stack 48 of the electric power and heat generation unit 63 and are emitted into the atmosphere in the form of environmentally friendly emission of gases, while environmental control of emissions is carried out by the environmental emission control system 56 of the process control and monitoring unit 65. The standby generator 50 of the electric power and heat generation unit 63 provides the initial start-up of all equipment of the structural configuration of the invention, as well as its operation during the preventive maintenance of the electric power and heat generating system 44 to meet own needs for electric power of the structural configuration. Carbon dioxide recuperated from the exhaust gases, the carbon dioxide capture system 51, is compressed in the third compression system 53 and accumulated in the third constant volume gasholder 53 and then sent to the second input of the solid waste and biomass dosing system 10 to restrict air access when solid waste and biomass are fed in the dosing method into the fast plasma gasification reactor 16, to ensure the fast plasma gasification. By the carbon dioxide backup cylinder battery 54 of the carbon dioxide capture unit 64 is provided carbon dioxide supply to the solid waste and biomass dosing system 10 at the initial start-up of the structural configuration of the invention, as well as its operation during preventive maintenance of the carbon dioxide capture unit 64. The generated electric power in the electric power and heat generation unit 63 is supplied to external customers through the first connection output 45, and the generated heat is supplied to external consumers through the second connection output 46. The process control and monitoring system 55 of the process control and monitoring unit 65, having two-way communication with all other units, provides multilevel control and management of the invention's structural configuration technological production process.

Figure 2 shows another preferred embodiment of the structural configuration of the invention in the absence of the need for electric power and heat generation, which has the following difference from the structural configuration of the invention shown in Fig.1:
In the absence of the need to generate electric power and heat to supply them to external consumers, a part of methane accumulated in the first constant volume gasholder 29 is used to generate electric power for own needs in an own-use electric power generation system 50, and the other part of methane accumulated in the first constant volume gasholder 29 is used as marketable products which is supplied to external customers through the methane output 30. The own-use electric power generation system 50 can be made either in the form of a gas engine electric power station or in the form of a gas turbine electric power station operating in a simple cycle. During operation of the electric power and heat generation system 50, the exhaust gases generated during the operation of either a gas engine electric power station or a gas turbine electric power station are cooled in an exhaust gas cooling system 47. Further, the electric power and heat generation unit 63 operates in a similar way, when instead of an own-use electric power generation system 50, an electric power and heat generation system 44 is installed.

The solution according to the invention ensures achievement of the following stated objectives and technological advantages:
- the efficiency of electric and thermal power generation is increased during the processing of solid household and industrial waste and biomass and due to the use of methane as a fuel gas with a constant calorific value for the operation of the electric power and heat generation unit;
- the emission of carbon dioxide into the atmosphere during the production of electric power and heat is reduced by means of capturing carbon dioxide from the exhaust gases of the electric power and heat generation unit and supplying it to the solid waste and biomass dosing system of the solid waste and biomass preparation unit;
- the efficiency of processing solid household and industrial waste and biomass of a plasma reactor increases without increasing its physical volume, due to the use of an expandable cascade configuration of plasma gasification plasma torch modules or plasma gasification induction modules;

- the environmental safety of processing solid waste and biomass is increased by ensuring the passage of all particles of shredded solid waste and biomass through a layer of water-steam plasma with a temperature of 6000-15000 °C, which excludes the formation of furans, dioxins, nitrogen oxides and others environmentally hazardous compounds;
- the production of environmentally friendly chemically resistant basalt-like slag, suitable for use as a building material, with the following characteristics: the rate of leaching of Na + ions (2-3) *10⁻⁶ g/cm² and the rate of leaching of heavy metals about 10⁻⁷ g/cm²;
- the nomenclature of manufactured marketable products obtained in the processing of solid household and industrial waste and biomass is expanding, namely it is now possible to produce methane, oxygen, cleaned water, potassium salts solution as potassium fertilizers;
- the range of processed waste is expanding with the possibility of processing waste at a humidity of up to 80% by introducing a vacuum and temperature drying system into the solid waste and biomass preparation unit;
- due to the use of binary carbide compounds of tungsten-tantalum or niobium-hafnium in the manufacture of cathodes and anodes of indirect arc plasma torches, the following significant technical advantages are obtained:
   - increasing the operating temperature of the cathodes and anodes of plasma torches,
   - increasing the current density in the plasma-forming gas,
   - significant increase in the efficiency of plasma torches,
   - increasing the service life of plasma torches,
   - preventing formation and dropout of condensate on the current-carrying parts of the plasma torches,
   - providing easy initial steam-driven start-up without any need to add air or other gases as plasma gases.

The economic advantages of the invention are as follows:
The economic efficiency increases and the payback period of the Complexes implementing the method of environmentally safe processing of solid waste and biomass using fast plasma gasification and pyrolysis gas conversion is reduced by eliminating the significant capital costs required to equip the Complexes with pyrolysis gas purification systems and suppression of toxic substances such as furans and dioxins, which implement other technologies for processing solid waste and biomass.

Complexes that implement the method of environmentally safe processing of solid waste and biomass using fast plasma gasification and pyrolysis gas conversion do not require connection to external communications, since they provide own electric power and water, which allows for their cost-effective construction in remote regions, as well as creation of mobile versions of installations, and also opens up the possibility of placing a mobile option on floating platforms and ships, for cleaning the world's oceans from floating islands of waste

### Expected areas of application of the invention:

The invention relates to the fields of energy, ecology, to the field of thermal processing of waste and biomass using their energy potential to generate electrical and thermal energy, to the agricultural and construction fields, as well as to the field of oxygen and methane production as marketable products for various industries.

**TABLE OF SYMBOLS**

| | |
|---|---|
| 1 | receiving area - solid waste and biomass treatment input |
| 2 | solid waste and biomass loading and crushing system |
| 3 | vacuum and temperature drying system |
| 4 | solid waste and biomass shredding system |
| 5 | metal separator system |
| 6 | ferrous metals output |
| 7 | nonferrous metals output |
| 8 | shredded solid waste and biomass storage tank |
| 9 | shredded solid waste and biomass feeding system |
| 10 | solid waste and biomass dosing system |
| 11 | air release |
| 12 | vacuum pump |
| 13 | compressor |
| 14 | high pressure receiver |
| 15 | air-plasma steam generator |
| 16 | fast plasma gasification reactor |
| 17 | slag collecting and granulating system |
| 18 | granulated slag output |
| 19 | first condenser |
| 20 | second condenser |
| 21 | cleaned and disinfected air release |
| 22 | first variable volume gasholder |
| 23 | second variable volume gasholder |
| 24 | third condenser |
| 25 | fourth condenser |
| 26 | first recirculating Sabatier reactor |
| 27 | second recirculating Sabatier reactor |
| 28 | first compression system |
| 29 | first constant volume gasholder |
| 30 | methane output |
| 31 | condensate normalization system |
| 32 | alkali dispenser |
| 33 | potassium salts solution and purified water membrane separation system |
| 34 | purified water storage tank |
| 35 | purified water output |
| 36 | potassium salts solution feeding system |
| 37 | potassium salts solution storage tank |
| 38 | potassium salts solution output |
| 39 | electrolyzer |
| 40 | third variable volume gasholder |
| 41 | second compression system |
| 42 | second constant volume gasholder |
| 43 | oxygen output |
| 44 | electric power and heat generation system |
| 45 | first connection output |
| 46 | second connection output |
| 47 | exhaust gas cooling system |
| 48 | exhaust stack |
| 49 | standby generator |
| 50 | own-use electric power generation system |
| 51 | carbon dioxide capture system |
| 52 | third compression system |
| 53 | third constant volume gasholder |
| 54 | carbon dioxide backup cylinder battery |
| 55 | process control and monitoring system |
| 56 | environmental emission control system |
| 57 | solid waste and biomass preparation unit |
| 58 | heat recovery cooling unit |
| 59 | fast plasma gasification unit |
| 60 | gas conversion unit |
| 61 | condensate processing unit |
| 62 | hydrogen-oxygen unit |
| 63 | electric power and heat generation unit |
| 64 | carbon dioxide capture unit |
| 65 | process control and monitoring unit |
| 66 | shredded solid waste and biomass loading input |
| 67 | shredded solid waste and biomass |
| 68 | dosing system forcer |
| 69 | air valve |
| 70 | carbon dioxide input |
| 71 | dosing system storage tank |
| 72 | dosing system doser |
| 73 | dosing system output gate |
| 74 | plasma gasification plasma torch module |
| 75 | indirect arc plasma torch |
| 76 | indirect arc plasma torch plasma jet |
| 77 | slag bath |
| 78 | slag heating plasma torch |
| 79 | slag heating plasma torch plasma jet |
| 80 | steam-gas mixture output |
| 81 | slag melt |
| 82 | molten slag draining device |
| 83 | emergency slag draining plug |
| 84 | cooling input |
| 85 | cooling output |
| 86 | plasma gasification induction module |
| 87 | plasma initialization electrode |
| 88 | superheated steam input |
| 89 | high frequency generator 27-54 MHz |
| 90 | inducer |
| 91 | inductively coupled plasma jet |
| 92 | high frequency electromagnetic radiation protection shield |
| 93 | air plasma steam generator housing |
| 94 | steam-air mixture and volatile compounds input |
| 95 | high temperature zone |
| 96 | superheated steam zone |
| 97 | superheated steam output |
| 98 | purified water input |
| 99 | purified water |
| 100 | water level sensor |
| 101 | evaporator |
| 102 | evaporator manifold |
| 103 | steam-air mixture output |

## Claims

1. Structural configuration for environmentally safe solid waste and biomass processing to increase the efficiency of power generation, which comprises a solid waste and biomass preparation unit (57), comprising a solid waste and biomass loading and crushing system (2), a solid waste and biomass shredding system (4 ), a metal separator system (5), a shredded solid waste and biomass storage tank (8), a shredded solid waste and biomass feeding system (9), and an air release (11) into the atmosphere; wherein a solid waste and biomass loading and crushing system input (2) is also the solid waste and biomass treatment input (1) of the solid waste and biomass preparation unit (57); wherein the output of the solid waste and biomass shredding system (4) is connected to the metal separator system input (5), the first output of the metal separator system (5) is connected to the input of the shredded solid waste and biomass storage tank (8), the second output of the metal separator system (5) is the output of marketable ferrous metals (6), and is also the first output of the solid waste and biomass preparation unit (57), the third output of the metal separator system (5) is the output of marketable non-ferrous metals (7), and is also the second output of the solid waste and biomass preparation unit (57); wherein the first output of the solid waste and biomass preparation unit (57) is also the output of the marketable ferrous metals products of the structural configuration, the second output of the solid waste and biomass preparation unit (57) is also the output of the marketable non-ferrous metals products of the structural configuration; the output of the shredded solid waste and biomass storage tank (8) is connected to the input of the shredded solid waste and biomass feeding system (9); wherein the structural configuration comprises also a fast plasma gasification unit (59), comprising a cleaned and disinfected air release (21) into the atmosphere and a slag collecting and granulating system (17), the output of the slag collecting and granulating system (17) is the output of marketable granular slag products (18), and is also the first output of the fast plasma gasification unit (59), the first output of the fast plasma gasification unit (59) is also the output of marketable granular slag products of the structural configuration; wherein the structural configuration further comprises an electric power and heat generation unit (63) comprising at least one electric power and heat generation system (44) or an own-use electric power generation system (50), also at least one exhaust gases cooling system (47), at least one exhaust stack (48) and a standby generator (49), where the first output of the at least one electric power and heat generation system (44) is also the first output of the electric power and heat generation unit (63), the first output of which is also the first connection output for external consumers of the structural configuration, the second output of the at least one electric power and heat generation system (44) is also the second output for the electric power and heat generation unit (63), the second output of the at least one electric power and heat generation unit (63) is also a second connection output for connection of the external heat consumers of the structural configuration, the third output of the at least one electric power and heat generation system (44) is connected to the at least one exhaust gas cooling system (47), the output of the at least one exhaust gas cooling system (47) is also the third output of the electric power and heat generation unit (63), the first input of the electric power and heat generation unit (63) is the first the input of the at least one electric power and heat generation system (44); wherein the structural configuration further comprises a carbon dioxide capture unit (64) comprising a carbon dioxide capture system (51), a third compression system (52), a third constant volume gasholder (53) and a carbon dioxide backup cylinder battery (54), where the third output of the electric power and heat generation unit (63) is connected to the input of the carbon dioxide capture unit (64), the input of which is also the first input of the carbon dioxide capture system (51), the output of the carbon dioxide capture system (51) through the third compression system (52) is connected to the input of the third constant volume gasholder ( 53), the output of which is combined with the output of the carbon dioxide backup cylinder battery (54) and is also the first output of the carbon dioxide capture unit (64), the second output of the carbon dioxide capture system (51), which is also the second output of the carbon dioxide capture unit (64), to which the input of the at least one exhaust stack (48) of the electric power and heat generation unit (63) is connected, the input of the at least one exhaust stack (48) is also the second input of the electric power and heat generation unit (63), and the output of the at least one exhaust stack (48) is also the fourth output of the electric power and heat generation unit (63); wherein the structural configuration further comprises a process control and monitoring unit (65) comprising a process control and monitoring system (55) and at least one environmental emission control system (56) and having two-way connections with other units of the configuration wherein the output of the at least one exhaust stack (48) is connected to the input of the process control and monitoring unit (65), the input of the at least one environmental emission control system (56) is also the input of the process control and monitoring unit (65); wherein in the absence of the need to generate electric power and heat, instead of an electric power and heat generation system (44), the electric power and heat generation unit (63) comprises an own-use electric power generation system (50), such that the input of the own-use electric power generation system (50) is also the first input of the electric power and heat generation unit (63), and the output of the own-use electric power generation system (50) is connected to the input of at least one exhaust gas cooling system (47);
wherein the structural configuration also comprises a heat recovery cooling unit (58), a gas conversion unit (60), a condensate processing unit (61) and a hydrogen-oxygen unit (62); wherein the solid waste and biomass preparation unit (57) additionally comprises a vacuum and temperature drying system (3), a solid waste and biomass dosing system (10) and a vacuum pump (12), the output of the shredded solid waste and biomass feeding system (9) is connected to the first input of the solid waste and biomass dosing system (10), the first output of which is also the fourth output of the solid waste and biomass preparation unit (57), which is connected to the first input of the fast plasma gasification unit (59); wherein the fast plasma gasification unit (59) additionally comprises a compressor (13), a high-pressure receiver (14), an air-plasma steam generator (15), a fast plasma gasification reactor (16), a first condenser (19) and a thr second condenser (20), the first input of the fast plasma gasification unit (59) is also the second input of the fast plasma gasification reactor (16); wherein the output of the solid waste and biomass loading and crushing system (2) is connected to the first input of the vacuum and temperature drying system (3), the first output of which is connected to the input of the solid waste and biomass shredding system (4), and the second output of the vacuum and temperature drying system (3) is connected to the input of the vacuum pump (12), the second input of the vacuum drying and temperature drying system (3) is connected to the second output of the solid waste and biomass dosing system (10), the third input of which is also the first input of the solid waste and biomass preparation unit (57), the second input of the solid waste and biomass dosing system (10) is also the second input of the solid waste and biomass preparation unit (57) and is connected to the first output of the carbon dioxide capture unit (64), the third output of the solid waste and biomass dosing system (10) is also the sixth output of the solid waste and biomass preparation unit (57), the fifth output of which is also the third output of the vacuum and temperature drying system (3), the sixth output of the solid waste and biomass preparation unit (57) is also the output of the air release (11) into the atmosphere of the structural configuration, the output of the vacuum pump (12) is also the third output of the solid waste and biomass preparation unit (57) and is connected to the second input of the fast plasma gasification unit (59); wherein the second input of the fast plasma gasification unit (59) is also the input of the compressor (13), the output of which is connected to the input of the high-pressure receiver (14), the first output of the high-pressure receiver (14) is connected to the first input of the air plasma steam generator (15), the first output of which is connected to the first input of the fast plasma gasification reactor (16), the second output of the air plasma steam generator (15) is connected to the first input of the first condenser (19), the third output of which is also the seventh output of the fast plasma gasification unit (59), the seventh output of the fast plasma gasification unit (59) is also the output for the cleaned and disinfected air release (21) into the atmosphere of the configuration, the second output of the first condenser (19) is connected to the third input of the air-plasma steam generator (15), the third output of which is also the sixth output of the fast plasma gasification unit (59), the first output of the fast plasma gasification reactor (16) is connected to the first input of the second condenser (20), the third output of which is connected to the second input of the first condenser (19), the third output of the fast plasma gasification reactor (16) is connected to the second input of the second condenser (20), the first output of which is also the second output of the fast plasma gasification unit (59), the input of the slag collection and granulating system (17) is connected to the second output of the fast plasma gasification reactor (16), the third input of which is also the fourth input of the fast plasma gasification unit (59), the second output of the high pressure receiver 14 is also the third output of the fast plasma gasification unit (59), the fourth output of which is also the first output of the first condenser (19), the second output of the second condenser (20) is also the fifth output of the fast plasma gasification unit (59), the third input of which is also the second input of the air-plasma steam generator (15).

2. The structural configuration as set forth in claim 1, wherein the gas conversion unit (60) comprises a first variable volume gasholder (22), a second variable volume gasholder (23), a third condenser (24), a fourth condenser (25), a first recirculation Sabatier reactor (26), a second recirculation Sabatier reactor (27), a first compression system (28) and a first constant volume gasholder (29), the first input of the first variable volume gasholder (22) is also the first input of the gas conversion unit (60), the second input of which is also the first input of the second variable volume gasholder (23), the first and second inputs of the gas conversion unit (60) are connected to the second output of the fast plasma gasification unit (59), the first output of the first variable volume gasholder (22) is connected to the first input of the first recirculation Sabatier reactor (26), the output of which is connected to the first input of the third condenser (24), the first output of which is connected to the second input of the first variable volume gasholder (22), the first output of the second variable volume gasholder (23) is connected to the first input of the second recirculation Sabatier reactor (27), the output of which is connected to the first input of the fourth condenser (25), the first output of which is connected to the second input of the second variable volume gasholder (23), the fifth input of the gas conversion unit (60) is also the second input of the fourth condenser (25), the third output of which is connected to the second input of the third condenser (24), the third output of which is also the fifth output of the gas conversion unit (60), the second output of the third condenser (24) is also the third output of the gas conversion unit (60), the fourth output of which is also the second output of the second condenser (25), the second input of the first recirculation Sabatier reactor (26) is also the third input of the gas conversion unit (60), the fourth input of which is also the second input of the second recirculation Sabatier reactor (27), the second output of the first variable volume gasholder (22) and the second output of the second variable volume gasholder (23) are combined and, through the first compression system (28), are connected to the input of the first constant volume gasholder (29), the first input of the power and heat generation unit (63) is connected to the first output of the gas conversion unit (60), the first output of which is also the first output of the first constant volume gasholder (29), the second output of the first constant volume gasholder (29) is also the second output of the gas conversion unit (60), the second output of which is also an output of marketable methane product (30) of the structural configuration.

3. The structural configuration as set forth in claims 1 or 2, wherein the condensate processing unit (61) comprises a condensate normalization system (31), an alkali dispenser (32), a potassium salts solution and purified water membrane separation system (33), a purified water storage tank (34), a potassium salts solution feeding system (36) and a potassium salts solution storage tank (37), the third output of the fast plasma gasification unit (59) is connected to the first input of the condensate processing unit (61), the first input of which is also the first input of the condensate normalization system (31), the fourth output of the fast plasma gasification unit (59) is connected to the second input of the condensate processing unit (61), the second input of which is also the second input of the condensate normalization system (31), the fifth output of the fast plasma gasification unit (59) is connected to the third input of the condensate processing unit (61), the third input of which is also the third input of the condensate normalization system (31), the third output of the gas conversion unit (60) is connected to the fourth input of the condensate processing unit (61), the fourth input of which is also the fourth input of the condensate normalization system (31), the fourth output of the gas conversion unit (60) is connected to the fifth input of the condensate processing unit (61), the fifth the input of which is also the fifth input of the condensate normalization system (31), the output of the alkali dispenser (32) is connected to the sixth input of the condensate normalization system (31), the output of which is connected to the input of the potassium salts solution and purified water membrane separation system (33), the first output of the potassium salts solution and purified water membrane separation system (33) is connected to the input of the purified water storage tank (34), the second output of the potassium salts solution and purified water membrane separation system (33) through the potassium salts solution feeding system (36) is connected to the input of the potassium salts storage tank (37), the output of the potassium salts storage tank (37) is also the first output of the condensate processing unit (61), the first output of which is also an output of marketable potassium salts solution product (38) of the structural configuration, the third input of the fast plasma gasification unit (59) is connected to the second output of the condensate processing unit (61), the second output of which is also the first output of the purified water storage tank (34), the second output of the purified water storage tank (34) is also the third output of the condensate processing unit (61), the third output of which is also an output of marketable purified water product (35) of the structural configuration, the third output of the purified water storage tank (34) is also the fourth output of the condensate processing unit (61).

4. The structural configuration as set forth in claims 1 to 3, wherein the hydrogen-oxygen unit (62) comprises an electrolyzer (39), third variable volume gasholder (40), a second compression system (41) and a second constant volume gasholder (42 ), the fourth output of the condensate processing unit (61) is connected to the first input of the hydrogen-oxygen unit (62), the first input of which is also the input of the electrolyzer (39), the first output of the electrolyzer (39) through the third variable volume gasholder (40) and the second compression system (41) is connected to the input of the second constant volume gasholder (42), the output of the second constant volume gasholder (42) is also the first output of the hydrogen-oxygen unit (62), the first output of which is also an output of marketable oxygen product (43) of the structural configuration, the third and the fourth inputs of the gas conversion unit (60) are connected to the second output of the hydrogen-oxygen unit (62), the second output of which is also the second output of the electrolyzer (39).

5. The structural configuration as set forth in claims to 4, wherein the input of the heat recovery cooling unit (58) is connected to the sixth output of the fast plasma gasification unit (59), the output of the heat recovery cooling unit (58) is connected to the first input of the solid waste and biomass preparation unit (57), the fifth output of which is connected to the fifth input of the gas conversion unit (60), the fifth output of which is connected to the fourth input of the fast plasma gasification unit (59).

6. The structural configuration as set forth in any of claims 1 to 5, wherein the solid waste and biomass dosing system (10) comprises a shredded solid waste and biomass loading input (66), a dosing system forcer (68), an air valve (69), a carbon dioxide input (70), a dosing system storage tank (71), a dosing system doser (72), a dosing system output gate (73), a cooling input (84) and a cooling output (85), in the upper part of the dosing system storage tank ( 71), a dosing system forcer (68) with an air valve (69) is installed, and at the bottom of the output of the dosing system storage tank (71), a dosing system doser (72) is installed, the synchronous feeding of shredded solid waste and biomass for fast plasma gasification in the fast plasma gasification reactor (16) is ensured by the output gate of the dosing system (73) installed at the bottom of the dosing system storage tank (71), downstream the dosing system doser (72), cooling of the dosing system doser (72) and the output gate of the dosing system (73) are provided by supplying water from the heat recovery cooling unit (58) through the cooling inputs (84) and cooling outputs (85).

7. The structural configuration as set forth in any of claims 1 to 5, wherein the fast plasma gasification reactor (16) comprises at least one plasma gasification plasma torch module (74) containing at least two indirect arc plasma torches (75), a slag heating plasma torch (78), a steam-gas mixture output (80), a molten slag draining system (82), an emergency slag draining plug (83), a cooling input (84) and a cooling output (85), at least one plasma gasification plasma torch module (74) is installed in the middle part of the fast plasma gasification reactor (16), which can be cascade in-built into the fast plasma gasification reactor housing (16), in the lower part of the fast plasma gasification reactor there is a slag bath (77) comprising at least two indirect arc plasma torches (75), a molten slag draining system (82) is installed on the side of the slag bath (77), which comprises a slag heating plasma torch (78), for an emergency slag draining, in the lower part of the slag bath (77) there is an emergency slag draining plug (83), cooling of at least two indirect arc plasma torches (75) installed in at least one of plasma gasification plasma torch module (74), at least two indirect arc plasma torches (75) installed in the slag bath (77) and the slag heating plasma torch (78) are provided by supplying water from the heat recovery cooling unit (58) through the cooling inputs (84) and cooling outputs ( 85); all indirect arc plasma torches (75) and (78) being made according to the scheme with a "hot" cathode and anode, which are made of binary carbide compounds of tungsten-tantalum or niobium-hafnium.

8. The structural configuration as set forth in claim 7, wherein the fast plasma gasification reactor (16) comprises at least one plasma gasification induction module (86) comprising at least one high-frequency generator 27-54 MHz (89) and at least one inducer (90), as well as a plasma initialization electrode (87) and at least one superheated steam input (88), in the middle part of the fast plasma gasification reactor (16) is installed at least one plasma gasification induction module (86), which can be cascade in-built into the fast plasma gasification reactor housing (16), the plasma initialization electrode (87) and at least one superheated steam input (88) are located in the upper part of the fast plasma gasification reactor (16), immediately upstream the upper at least one plasma gasification induction module (86); wherein the at least one 27-54 MHz high-frequency generator (89) is connected to the at least one inducer (90), the at least one inducer (90) is provided with at least one protection shield against high-frequency electromagnetic radiation (92), the cooling of the inducer (90) is provided by supplying water from the heat recovery cooling unit (58) through the cooling inputs (84) and cooling outputs (85).

9. The structural configuration as set forth in any of claims 1 to 5, wherein the air-plasma steam generator (15) comprises an indirect arc plasma torch (75), an air-plasma steam generator housing (93), a steam-air mixture and volatile compounds input (94 ), a superheated steam output (97), a purified water input (98), a water level sensor (100), an evaporator (101), an evaporator manifold (102) and a steam-air mixture output (103); inside the air-plasma steam generator housing (93) the evaporator (101) is installed, upstream of which the indirect arc plasma torch (75) is located; downstream, at the output of the evaporator (101), the evaporator manifold (102) is installed; a high-temperature zone (95) and a zone of superheated steam (96) are separated in the air-plasma steam generator housing (93), to control the level of purified water (99) coming from the purified water input (98), the water level sensor (100) is built into the air-plasma steam generator housing (93).

10. Method for environmentally safe solid waste and biomass processing to increase the efficiency of electric power generation, during which solid waste and biomass are loaded, crushed and shredded, and ferrous and non-ferrous metals are separated from them and supplied as marketable products to external consumers, and cleaned from metals shredded solid waste and biomass are accumulated, then accumulated shredded solid waste and biomass separated from metals are fed in a dosing method into a fast plasma gasification reactor (16), in the fast plasma gasification reactor the shredded solid waste and biomass are subjected to fast plasma gasification, during which melting occurs and a basalt-like slag is formed, which is processed to obtain granulated slag, and the obtained granulated slag, as a marketable product, is supplied to external consumers; part of the methane accumulated in a first constant volume gasholder (29) is used for electric power and heat generation, while part of the generated electric power is supplied for own use, and the other part of the generated electric power and heat is supplied to external consumers, carbon dioxide captured from the exhaust gases formed during the electric power and heat generation is compressed and accumulated; in the absence of the need to generate electric power and heat, electric power for own use is generated from part of the accumulated methane in the first constant volume gasholder (29) wherein solid waste and biomass are subjected to vacuum and temperature drying, whereby in the process of vacuum and temperature drying, vacuum extraction of volatile compounds and water steam from solid waste and biomass is provided, the steam-air mixture and volatile compounds are compressed and accumulated, then the accumulated steam-air mixture and volatile compounds are subjected to plasma cleaning-disinfection and superheated steam is generated, which, as a plasma-forming gas, is fed indirect arc plasma torches (75) to the fast plasma gasification reactor (16) for fast plasma gasification, and a steam-air mixture obtained in the process of plasma cleaning-disinfection is condensed, separating water from the steam-air mixture extracted from solid waste and biomass, and purified and decontaminated air is released into the atmosphere.

11. Method as set forth in claim 10, wherein the accumulated dehydrated, dried and shredded solid waste and biomass purified from metals are fed in the dosing method into the fast plasma gasification reactor (16), while ensuring the discharge of excess air formed during the dosing method into the atmosphere, in the fast plasma gasification reactor, shredded solid waste and biomass purified from metals are subjected to fast plasma gasification, while the obtained steam-gas mixture as a result of fast plasma gasification is condensed, separating water steam from the steam-gas mixture, the gas mixture freed from water steam, in the form of pyrolysis gas, is accumulated in turn in two variable volume gasholders (22,23).

12. Method as set forth in claim 11, wherein the hydrogen obtained as a result of electrolysis, as well as the pyrolysis gas from the first of the two variable volume gasholders (22,23) are fed to a first of two recirculation Sabatier reactors (26,27) for carrying out a recirculating autothermal Sabatier reaction, the obtained steam-gas mixture as a result of the recirculating autothermal Sabatier reaction, containing mainly methane, is condensed, separating water steam from the steam-gas mixture, the obtained gas mixture is accumulated in the first of two variable volume gasholders, while the cycle consisting of feeding hydrogen obtained in as a result of electrolysis and of feeding pyrolysis gas from the first of the two variable volume gasholders to the first of the two recirculation Sabatier reactors to carry out the recirculating autothermal Sabatier reaction, is repeated until there is a complete conversion of the gas mixture located in the first of the two variable volume gasholders into methane and the entire first gasholder will not be filled with methane, while the methane content in the steam-gas mixture will increase with each successive cycle, and the total time of the gas mixture conversion cycles is limited and is determined by the ratio of the temperature parameters of the recirculation autothermal Sabatier reaction and parameters of the fast plasma gasification, after filling the first of the two variable volume gasholders with methane, methane obtained from the first of the two variable volume gasholders is compressed and accumulated in the first constant volume gasholder, at the same time, hydrogen obtained as a result of electrolysis, as well as pyrolysis gas from the second of the two variable volume gasholders are fed to the second of the two recirculation Sabatier reactors to carry out a recirculating autothermal Sabatier reaction, the steam-gas mixture obtained as a result of the recirculating autothermal Sabatier reaction, containing mainly methane, is condensed, separating the water steam from the steam-gas mixture, the obtained gas mixture is accumulated in the second of the two variable volume gasholders, wherein the cycle consisting of feeding hydrogen obtained as a result of electrolysis and of feeding pyrolysis gas from the second of the two variable volume gasholders to the second of the two recirculation Sabatier reactors to carry out the recirculating autothermal Sabatier reaction, is repeated until there is a complete conversion of the gas mixture located in the second of the two variable volume gasholders into methane and the entire second gasholder will not be filled with methane, wherein, the methane content in the steam-gas mixture will increase with each successive cycle, and the total time for the conversion cycles of the gas mixture into methane is limited and is determined by the ratio of the temperature parameters of the recirculating autothermal Sabatier reaction and the parameters of the fast plasma gasification, after filling the second of the two variable volume gasholders with methane, methane obtained from the second of the two variable volume gasholders is compressed and accumulated in the first constant volume gasholder, at the same time, the cycles of the pyrolysis gas and the gas mixture conversion into methane using a recirculating autothermal Sabatier reaction are repeated in the first recirculation Sabatier reactor and then repeated in the second recirculation Sabatier reactor, and thus, using the recirculating autothermal Sabatier reaction, the continuity of the technological process of converting pyrolysis gas to methane is ensured.

13. Method as set forth in claim 12, wherein the condensate obtained during condensation of water steam from a steam-gas mixture obtained during fast plasma gasification, condensate obtained during condensation of water steam from the steam-air mixture extracted from solid waste and biomass, condensate obtained during condensation of water steam from the steam-gas mixture obtained during the recirculating autothermal Sabatier reaction in the first recirculation Sabatier reactor (26), condensate obtained during the condensation of water steam from the steam-gas mixture obtained during the recirculating autothermal Sabatier reaction in the second recirculation Sabatier reactor (27), as well as the condensate formed during the accumulation of the steam-air mixture and volatile compounds are pH-normalized using alkali dosing, then the membrane separation of the obtained normalized condensate into a potassium salts solution and cleaned water is ensured, the obtained potassium salts solution is fed to the storage tank and accumulated, and then, as potassium fertilizers - marketable products - are supplied to external consumers, cleaned water is also accumulated, then part of the cleaned water is supplied for electrolysis, the other part of the cleaned water is supplied to ensure plasma cleaning-disinfection and generation of superheated steam, and the remaining third part, as a marketable product, is supplied to external consumers.

14. Method as set forth in any of claims 12 or 13, wherein the vacuum and temperature drying is provided due to the extraction of heat obtained during condensate cooling during condensation of water steam from the steam-gas mixture obtained during fast plasma gasification, from the steam-air mixture extracted from solid waste and biomass, from the steam-gas mixture obtained during the recirculating autothermal Sabatier reaction in the first recirculation Sabatier reactor (26), from the steam-gas mixture obtained during the recirculating autothermal Sabatier reaction in the second recirculation Sabatier reactor (27), as well as due to the extraction of heat generated in the process of plasma cleaning-disinfection of the steam-air mixture and volatile compounds, wherein, all these heat sources are combined into a single closed cooling loop with heat recovery for vacuum and temperature drying.

15. Method as set forth in any of claims 10 to 14, wherein oxygen obtained as a result of electrolysis is accumulated in a third variable volume gasholder, the accumulated oxygen is compressed and accumulated in a the second constant volume gasholder, and then, as a marketable product, is supplied to external consumers; the accumulated methane in the first constant volume gasholder (29) is used as follows:
part of the methane accumulated in the first constant volume gasholder is used as a marketable product and supplied to external consumers, and the other part of the methane accumulated in the first constant volume gasholder is used to generate electric power and heat; the accumulated carbon dioxide captured from the exhaust gases formed during the electric power and heat generation or only during the electric power generation is directed to restrict the access of air when solid waste and biomass are fed in the dosing method to the fast plasma gasification reactor to ensure fast plasma gasification.

16. Method as set forth in any of claims 10 to 15, wherein in the absence of the need to generate electric power and heat, electric power for own use is produced from part of the methane accumulated in the first constant volume gasholder (29), and the other part of the methane accumulated in the first constant volume gasholder, is used as a marketable product and supplied to external consumers.

17. Method as set forth in any of claims 10 to 16, wherein the indirect arc plasma torches (75) are made according to the scheme with "hot" cathode and anode, wherein binary carbide compounds from tungsten as materials for the manufacture of anodes and cathodes -tantalum or niobium-hafnium are used.

## Patentansprüche

1. Strukturelle Konfiguration für eine ökologisch sichere Verarbeitung von festen Abfällen und Biomasse, um die Effizienz der Elektroenergieerzeugung zu verbessern, die eine Einheit zur Vorbereitung von festen Abfällen und Biomasse (57) enthält, die eine Anlage zum Laden und Brechen von festen Abfällen und Biomasse (2), eine Anlage zum Zerkleinern von festen Abfällen und Biomasse (4), eine Anlage zur Metallabscheidung (5), einen Speicherbehälter für zerkleinerte feste Abfälle und Biomasse (8), eine Anlage zur Zuführung von zerkleinerten festen Abfällen und Biomasse (9) und einen Luftablass (11) enthält; worin der Eingang der Anlage zum Laden und Brechen von festen Abfällen und Biomasse (2) auch der Eingang der Verwertung von festen Abfällen und Biomasse (1) der Einheit zur Vorbereitung von festen Abfällen und Biomasse (57) ist; worin der Ausgang der Anlage zum Zerkleinern von festen Abfällen und Biomasse (4) mit dem Eingang der Anlage zur Metallabscheidung (5) verbunden ist, und der erste Ausgang der Anlage zur Metallabscheidung (5) mit dem Eingang des Speicherbehälters für zerkleinerte feste Abfälle und Biomasse (8) verbunden ist, der zweite Ausgang der Anlage zur Metallabscheidung (5) der Ausgang von kommerziellen Eisenmetallprodukten (6) ist, und ist auch der erste Ausgang der Einheit zur Vorbereitung von festen Abfällen und Biomasse (57), der dritte Ausgang der Anlage zur Metallabscheidung (5) der Ausgang von kommerziellen Nichteisenmetallprodukten (7) ist, und ist auch der zweite Ausgang der Einheit zur Vorbereitung von festen Abfällen und Biomasse (57); worin der erste Ausgang der Einheit zur Vorbereitung von festen Abfällen und Biomasse (57) auch der Ausgang von kommerziellen Eisenmetallprodukten der strukturellen Konfiguration ist, der zweite Ausgang der Einheit zur Vorbereitung von festen Abfällen und Biomasse (57) auch der Ausgang von kommerziellen Nichteisenmetallprodukten der strukturellen Konfiguration ist; der Ausgang der strukturellen Konfiguration für zerkleinerte feste Abfälle und Biomasse (8) mit dem Eingang der Anlage zur Zuführung von zerkleinerten festen Abfällen und Biomasse (9) verbunden ist; wobei die strukturelle Konfiguration auch eine schnelle Plasmavergasungseinheit (59) enthält, die eine Freisetzung von gereinigter und entseuchter Luft (21) in die Atmosphäre und eine Schlackensammel- und -granulieranlage (17) enthält, der Ausgang der Schlackensammel- und -granulieranlage (17) der Ausgang von kommerziellen Produkten granulierter Schlacke (18) ist, und auch der erste Ausgang der schnellen Plasmavergasungseinheit (59) ist, der erste Ausgang der schnellen Plasmavergasungseinheit (59) auch der Ausgang von kommerziellen Produkten granulierter Schlacke der strukturellen Konfiguration ist; wobei die strukturelle Konfiguration ferner eine Einheit zur Erzeugung von Elektroenergie und Wärme (63) enthält, die mindestens eine Anlage zur Erzeugung von Elektroenergie und Wärme (44) oder eine Anlage zur Elektroenergieerzeugung für den Eigenbedarf (50) sowie mindestens eine Anlage zur Abgaskühlung (47), mindestens einen Schornstein zum Abgasauspuffen (48) und einen Notgenerator (49) enthält, wobei der erste Ausgang der mindestens einen Anlage zur Erzeugung von Elektroenergie und Wärme (44) auch der erste Ausgang der Einheit zur Erzeugung von Elektroenergie und Wärme (63) ist, deren erster Ausgang auch der erste Anschlussausgang für externe Elektroenergieverbraucher der strukturellen Konfiguration ist, der zweite Ausgang der mindestens einen Anlage zur Erzeugung von Elektroenergie und Wärme (44) auch der zweite Ausgang der Einheit zur Erzeugung von Elektroenergie und Wärme (63) ist, deren zweiter Ausgang auch der zweite Anschlussausgang für externe Wärmeverbraucher der strukturellen Konfiguration ist, der dritte Ausgang mindestens einer Anlage zur Erzeugung von Elektroenergie und Wärme (44) mit mindestens einer Anlage zur Abgaskühlung (47) verbunden ist, der Ausgang mindestens einer Anlage zur Abgaskühlung (47) auch der dritte Ausgang der Einheit zur Erzeugung von Elektroenergie und Wärme (63) ist, der erste Eingang der Einheit zur Erzeugung von Elektroenergie und Wärme (63) auch der erste Eingang mindestens einer Anlage zur Erzeugung von Elektroenergie und Wärme (44) ist; wobei die strukturelle Konfiguration zusätzlich eine Kohlendioxid-Auffangeinheit (64) enthält, die eine Kohlendioxid-Auffangvorrichtung (51), eine dritte Komprimierungsanlage (52), einen dritten Gasbehälter mit konstantem Volumen (53) und eine Backup-Batterie der Kohlendioxidflaschen (54) enthält, wobei der dritte Ausgang der Einheit zur Erzeugung von Elektroenergie und Wärme (63) mit dem Eingang der Kohlendioxid-Auffangeinheit (64) verbunden ist, deren Eingang auch der Eingang der Kohlendioxid-Auffangvorrichtung (51) ist, der erste Ausgang der Kohlendioxid-Auffangvorrichtung (51) über die dritte Komprimierungsanlage (52) mit dem Eingang des dritten Gasbehälters mit konstantem Volumen (53) verbunden ist, deren Ausgang mit dem Ausgang der Backup-Batterie der Kohlendioxidflaschen (54) gekoppelt ist und die auch ein erster Ausgang der Kohlendioxid-Auffangeinheit (64) ist, der zweite Ausgang der Kohlendioxid-Auffangvorrichtung (51), der auch der zweite Ausgang der Kohlendioxid-Auffangeinheit (64) ist, dem der Eingang mindestens eines Schornsteins zum Abgasauspuffen (48) der Einheit zur Erzeugung von Elektroenergie und Wärme (63) verbunden ist, der Eingang mindestens eines Schornsteins zum Abgasauspuffen (48) auch der zweite Eingang der Einheit zur Erzeugung von Elektroenergie und Wärme (63) ist, und der Ausgang mindestens eines Schornsteins zum Abgasauspuffen (48) auch der vierte Ausgang der Einheit zur Erzeugung von Elektroenergie und Wärme (63) ist, wobei die strukturelle Konfiguration zusätzlich eine Einheit zur Steuerung und Überwachung des technologischen Prozesses (65) enthält, die eine Anlage zur Steuerung und Überwachung des technologischen Prozesses (55) und mindestens eine Anlage zur ökologischen Emissionskontrolle (56) enthält und die bidirektionale Verbindungen mit anderen Einheiten der strukturellen Konfiguration aufweist, wobei der Ausgang mindestens eines Schornsteins zum Abgasauspuffen (48) mit einem Eingang der Einheit zur Steuerung und Überwachung des technologischen Prozesses (65) verbunden ist, der Eingang mindestens einer Anlage zur ökologischen Emissionskontrolle (56) auch der Eingang der Einheit zur Steuerung und Überwachung des technologischen Prozesses (65) ist; worin, sofern keine Notwendigkeit zur Erzeugung von Elektroenergie und Wärme besteht, die Einheit zur Erzeugung von Elektroenergie und Wärme (63) anstelle der Anlage zur Erzeugung von Elektroenergie und Wärme (44) eine Anlage zur Elektroenergieerzeugung für den Eigenbedarf (50) enthält, wobei der Eingang der Anlage zur Energieerzeugung für den Eigenbedarf (50) auch der erste Eingang der Einheit zur Erzeugung von Elektroenergie und Wärme (63) ist, und der Ausgang der Anlage zur Energieerzeugung für den Eigenbedarf (50) mit dem Eingang mindestens einer Anlage zur Abgaskühlung (47) verbunden ist; wobei, die strukturelle Konfiguration zusätzlich eine Kühleinheit mit Wärmerückgewinnung (58), eine Gasumwandlungseinheit (60), eine Einheit zur Kondensatverarbeitung (61) und eine Wasserstoff-Sauerstoff-Einheit (62) enthält; worin die Einheit zur Vorbereitung von festen Abfällen und Biomasse (57) zusätzlich eine Anlage zur Vakuum- und Temperaturtrocknung (3), eine Anlage zum Dosieren von festen Abfällen und Biomasse (10) und eine Vakuumpumpe (12) enthält, der Ausgang der Anlage zur Zuführung von zerkleinerten festen Abfällen und Biomasse (9) mit dem ersten Eingang der Anlage zum Dosieren von festen Abfällen und Biomasse (10) verbunden ist, deren erster Ausgang auch der vierte Ausgang der Einheit zur Vorbereitung von festen Abfällen und Biomasse (57) ist, die mit dem ersten Eingang der schnellen Plasmavergasungseinheit (59) verbunden ist; worin die schnelle Plasmavergasungseinheit (59) ferner einen Kompressor (13), einen Hochdruckempfänger (14), einen Luft-Plasma-Dampferzeuger (15), einen schnellen Plasmavergasungsreaktor (16), einen ersten Kondensator (19) und einen zweiten Kondensator (20) enthält, worin der erste Eingang der schnellen Plasmavergasungseinheit (59) auch der zweite Eingang des schnellen Plasmavergasungsreaktors (16) ist; worin der Ausgang der Anlage zum Laden und Brechen von festen Abfällen und Biomasse (2) mit dem ersten Eingang der Anlage zur Vakuum- und Temperaturtrocknung (3) verbunden ist, deren erster Ausgang mit dem Eingang der Anlage zum Zerkleinern von festen Abfällen und Biomasse (4) verbunden ist, und der zweite Ausgang der Anlage zur Vakuum- und Temperaturtrocknung (3), mit dem Eingang der Vakuumpumpe (12) verbunden ist, der zweite Eingang der Anlage zur Vakuum- und Temperaturtrocknung (3) mit dem zweiten Ausgang der Anlage zum Dosieren von festen Abfällen und Biomasse (10) verbunden ist, deren dritter Eingang auch der erste Eingang der Einheit zur Vorbereitung von festen Abfällen und Biomasse (57) ist, der zweite Eingang der Anlage zum Dosieren von festen Abfällen und Biomasse (10) auch der zweite Eingang der Einheit zur Vorbereitung von festen Abfällen und Biomasse (57) ist und mit dem ersten Ausgang der Kohlendioxid-Auffangeinheit (64) verbunden ist, der dritte Ausgang der Anlage zum Dosieren von festen Abfällen und Biomasse (10) auch der sechste Ausgang der Einheit zur Vorbereitung von festen Abfällen und Biomasse (57) ist, deren fünfter Ausgang auch der dritte Ausgang der Anlage zur Vakuum- und Temperaturtrocknung (3) ist, der sechste Ausgang der Einheit zur Vorbereitung von festen Abfällen und Biomasse (57) auch der Ausgang des Luftablasses (11) in die Atmosphäre der strukturellen Konfiguration ist, der Ausgang der Vakuumpumpe (12) auch der dritte Ausgang der Einheit zur Vorbereitung von festen Abfällen und Biomasse (57) ist und mit dem zweiten Eingang der schnellen Plasmavergasungseinheit (59) verbunden ist; worin der zweite Eingang der schnellen Plasmavergasungseinheit (59) auch der Eingang des Kompressors (13) ist, dessen Ausgang mit dem Eingang eines Hochdruckempfängers (14) verbunden ist, der erste Ausgang des Hochdruckempfängers (14) mit dem ersten Eingang des Luft-Plasma-Dampferzeugers (15) verbunden ist, dessen erster Ausgang mit dem ersten Eingang des schnellen Plasmavergasungsreaktors (16) verbunden ist, der zweite Ausgang des Luft-Plasma-Dampferzeugers (15) mit dem ersten Eingang des ersten Kondensators (19) verbunden ist, dessen dritter Ausgang auch der siebte Ausgang der schnellen Plasmavergasungseinheit (59) ist, der siebte Ausgang der schnellen Plasmavergasungseinheit (59) auch der Ausgang der Freisetzung von gereinigter und entseuchter Luft (21) in die Atmosphäre der strukturellen Konfiguration ist, der zweite Ausgang des ersten Kondensators (19) der Einheit mit dem dritten Eingang des Luft-Plasma-Dampferzeugers (15) verbunden ist, dessen dritter Ausgang auch der sechste Ausgang der schnellen Plasmavergasungseinheit (59) ist, der erste Ausgang des schnellen Plasmavergasungsreaktors (16) mit dem ersten Eingang des zweiten Kondensators (20) verbunden ist, dessen dritter Ausgang mit einem zweiten Eingang des ersten Kondensators (19) verbunden ist, wobei der dritte Ausgang des schnellen Plasmavergasungsreaktors (16) mit dem zweiten Eingang des zweiten Kondensators (20) verbunden ist, dessen erster Ausgang ebenfalls der zweite Ausgang der schnellen Plasmavergasungseinheit (59) ist, der Eingang der Schlackensammel- und -granulieranlage (17) mit dem zweiten Ausgang des schnellen Plasmavergasungsreaktors (16) verbunden ist, dessen dritter Eingang auch der vierte Eingang der schnellen Plasmavergasungseinheit (59) ist, der zweite Ausgang des Hochdruckempfängers 14 auch der dritte Ausgang der schnellen Plasmavergasungseinheit (59) ist, dessen vierter Ausgang auch der erste Ausgang des ersten Kondensators (19) ist, der zweite Ausgang des zweiten Kondensators (20) auch der fünfte Ausgang der schnellen Plasmavergasungseinheit (59) ist, dessen dritter Eingang auch der zweite Eingang des Luft-Plasma-Dampferzeugers (15) ist.

2. Die Strukturelle Konfiguration nach Anspruch 1, wobei, die Gasumwandlungseinheit (60) den ersten Gasbehälter mit veränderlichem Volumen (22), den zweiten Gasbehälter mit veränderlichem Volumen (23), den dritten Kondensator (24), den vierten Kondensator (25), den ersten Sabatier-Rezirkulationsreaktors (26), den zweiten Sabatier-Rezirkulationsreaktors (27), die erste Komprimierungsanlage (28) und den ersten Gasbehälter mit konstantem Volumen (29) enthält, der erste Eingang des ersten Gasbehälters mit veränderlichem Volumen (22) auch der erste Eingang der Gasumwandlungseinheit (60) ist, deren zweiter Eingang auch der erste Eingang des zweiten Gasbehälters mit veränderlichem Volumen (23) ist, der erste und der zweite Eingang der Gasumwandlungseinheit (60) mit einem zweiten Ausgang der schnellen Plasmavergasungseinheit (59) verbunden sind, der erste Ausgang des ersten Gasbehälters mit veränderlichem Volumen (22) mit einem ersten Eingang des ersten Sabatier-Rezirkulationsreaktors (26) verbunden ist, dessen Ausgang mit einem ersten Eingang des dritten Kondensators (24) verbunden ist, dessen erster Ausgang mit einem zweiten Eingang des ersten Gasbehälters mit veränderlichem Volumen (22) verbunden ist, der erste Ausgang des zweiten Gasbehälters mit veränderlichem Volumen (23) mit dem ersten Eingang des zweiten Sabatier-Rezirkulationsreaktors (27) verbunden ist, dessen Ausgang mit dem ersten Eingang des vierten Kondensators (25) verbunden ist, dessen erster Ausgang mit dem zweiten Eingang des zweiten Gasbehälters mit veränderlichem Volumen (23) verbunden ist, der fünfte Eingang der Gasumwandlungseinheit (60) auch der zweite Eingang des vierten Kondensators (25) ist, dessen dritter Ausgang mit dem zweiten Eingang des dritten Kondensators (24) verbunden ist, dessen dritter Ausgang auch der fünfte Ausgang der Gasumwandlungseinheit (60) ist, der zweite Ausgang des dritten Kondensators (24) auch der dritte Ausgang der Gasumwandlungseinheit (60) ist, dessen vierter Ausgang auch der zweite Ausgang des zweiten Kondensators (25) ist, der zweite Eingang des ersten Sabatier-Rezirkulationsreaktors (26) auch der dritte Eingang der Gasumwandlungseinheit (60) ist, dessen vierter Eingang auch der zweite Eingang des zweiten Sabatier-Rezirkulationsreaktors (27) ist, der zweite Ausgang des ersten Gasbehälters mit veränderlichem Volumen (22) und der zweite Ausgang des zweiten Gasbehälters mit veränderlichem Volumen (23) kombiniert und über die erste Komprimierungsanlage (28) mit dem Eingang des ersten Gasbehälters mit konstantem Volumen (29) verbunden sind, der erste Eingang der Einheit zur Erzeugung von Elektroenergie und Wärme (63) mit dem ersten Ausgang der Gasumwandlungseinheit (60) verbunden ist, dessen erster Ausgang auch der erste Ausgang des ersten Gasbehälters mit konstantem Volumen (29) ist, der zweite Ausgang des ersten Gasbehälters mit konstantem Volumen (29) auch der zweite Ausgang der Gasumwandlungseinheit (60) ist, dessen zweiter Ausgang auch der Ausgang von kommerzieller Produkte Methan (30) der Strukturellen Konfiguration ist.

3. Die Strukturelle Konfiguration nach Anspruch 1 oder Anspruch 2, wobei die Einheit zur Kondensatverarbeitung (61) die Kondensat-Normalisierungsanlage (31), ein Alkali-Dosiergerät (32), eine Anlage zur Membrantrennung von Kaliumsalzlösung und Reinwasser (33), einen Reinwasser-Speicherbehälter (34), eine Anlage zur Zuführung von Kaliumsalzlösung (36) und einen Kaliumsalzlösung-Speicherbehälter (37) enthält, der dritte Ausgang der schnellen Plasmavergasungseinheit (59) mit einem ersten Eingang der Einheit zur Kondensatverarbeitung (61) verbunden ist, deren erster Eingang auch der erste Eingang der Kondensat-Normalisierungsanlage (31) ist, der vierte Ausgang der schnellen Plasmavergasungseinheit (59) mit dem zweiten Eingang der Einheit zur Kondensatverarbeitung (61) verbunden ist, deren zweiter Eingang auch der zweite Eingang der Kondensat-Normalisierungsanlage (31) ist, der fünfte Ausgang der schnellen Plasmavergasungseinheit (59) mit dem dritten Eingang der Einheit zur Kondensatverarbeitung (61) verbunden ist, deren dritter Eingang auch der dritte Eingang der Kondensat-Normalisierungsanlage (31) ist, der dritte Ausgang der Gasumwandlungseinheit (60) mit dem vierten Eingang der Einheit zur Kondensatverarbeitung (61) verbunden ist, deren vierter Eingang auch der vierte Eingang der Kondensat-Normalisierungsanlage (31) ist, der vierte Ausgang der Gasumwandlungseinheit (60) mit dem fünften Eingang der Einheit zur Kondensatverarbeitung (61) verbunden ist, deren fünfter Eingang auch der fünfte Eingang der Kondensat-Normalisierungsanlage (31) ist, der Ausgang des Alkali-Dosiergeräts (32) mit dem sechsten Eingang der Kondensat-Normalisierungsanlage (31) verbunden ist, deren Ausgang mit dem Eingang der Anlage zur Membrantrennung von Kaliumsalzlösung und Reinwasser (33) verbunden ist, der erste Ausgang der Anlage zur Membrantrennung von Kaliumsalzlösung und Reinwasser (33) mit dem Eingang des Reinwasser-Speicherbehälters (34) verbunden ist, der zweite Ausgang der Anlage zur Membrantrennung von Kaliumsalzlösung und Reinwasser (33) über die Anlage zur Zuführung von Kaliumsalzlösung (36) mit dem Eingang des Kaliumsalzlösungsspeichers (37) verbunden ist, der Ausgang des Kaliumsalzlösung-Speicherbehälters (37) auch der erste Ausgang der Einheit zur Kondensatverarbeitung (61) ist, dessen erster Ausgang auch der Ausgang von kommerziellen Produkten Kaliumsalzlösung (38) der Strukturellen Konfiguration ist, der dritte Eingang der schnellen Plasmavergasungseinheit (59) mit dem zweiten Ausgang der Einheit zur Kondensatverarbeitung (61) verbunden ist, deren zweiter Ausgang auch der erste Ausgang des Reinwasser-Speicherbehälters (34) ist, der zweite Ausgang des Reinwasser-Speicherbehälters (34) auch der dritte Ausgang der Einheit zur Kondensatverarbeitung (61) ist, deren dritter Ausgang auch der Ausgang von kommerziellen Produkten Reinwassers (35) der Strukturellen Konfiguration ist, der dritte Ausgang des Reinwasser-Speicherbehälters (34) auch der vierte Ausgang der Einheit zur Kondensatverarbeitung (61) ist.

4. Die Strukturelle Konfiguration nach Ansprüchen 1 - 3, wobei die Wasserstoff-Sauerstoff-Einheit (62) den Elektrolyseur (39), den dritten volumenveränderlichen Gasbehälter (40), die zweite Komprimierungsanlage (41) und den zweiten Gasbehälter mit konstantem Volumen (42) enthält, der vierte Ausgang der Einheit zur Kondensatverarbeitung (61) mit dem ersten Eingang der Wasserstoff-Sauerstoff-Einheit (62) verbunden ist, deren erster Eingang auch der Eingang des Elektrolyseurs (39) ist, der erste Ausgang des Elektrolyseurs (39) über den dritten Gasbehälter mit variablem Volumen (40) und die zweite Komprimierungsanlage (41) mit dem Eingang des zweiten Gasbehälters mit konstantem Volumen (42) verbunden ist, der Ausgang des zweiten Gasbehälters mit variablem Volumen (42) auch der erste Ausgang der Wasserstoff-Sauerstoff-Einheit (62) ist, deren erster Ausgang auch der Ausgang von kommerziellen Produkten Sauerstoff (43) der Strukturellen Konfiguration ist, der dritte und vierte Eingang der Gasumwandlungseinheit (60) mit dem zweiten Ausgang der Wasserstoff-Sauerstoff-Einheit (62) verbunden sind, deren zweiter Ausgang auch der zweite Ausgang des Elektrolyseurs (39) ist.

5. Die Strukturelle Konfiguration nach Ansprüchen 2 - 4, wobei der Eingang der Kühleinheit mit Wärmerückgewinnung (58) mit dem sechsten Ausgang der schnellen Plasmavergasungseinheit (59) verbunden ist, der Ausgang der Kühleinheit mit Wärmerückgewinnung (58) mit dem ersten Eingang der Einheit zur Vorbereitung von festen Abfällen und Biomasse (57) verbunden ist, deren fünfter Ausgang mit dem fünften Eingang der Gasumwandlungseinheit (60) verbunden ist, deren fünfter Ausgang mit dem vierten Eingang der schnellen Plasmavergasungseinheit (59) verbunden ist.

6. Die Strukturelle Konfiguration nach einem der Ansprüche 1 - 5, wobei die Anlage zum Dosieren von festen Abfällen und Biomasse (10) den Ladeeingang von zerkleinerten festen Abfällen und Biomasse (66), den Kolben der Dosieranlage (68), das Luftventil (69), den Kohlendioxid-Versorgungseingang (70), den Speicherbehälter der Dosieranlage (71), das Dosiergerät der Dosieranlage (72), die Ausgangsschleuse der Dosieranlage (73), den Kühleingang (84) und den Kühlausgang (85) enthält, im oberen Teil des Speicherbehälters der Dosieranlage (71) ein Kolben der Dosieranlage (68) mit dem Luftventil (69) eingebaut ist und unten am Ausgang des Speicherbehälters der Dosieranlage (71) das Dosiergerät der Dosieranlage (72) eingebaut ist, die synchrone Zuführung von zerkleinerten festen Abfällen und Biomasse zur schnellen Plasmavergasung im schnellen Plasmavergasungsreaktor (16) durch die Ausgangsschleuse der Dosieranlage (73), die unterhalb des eingebauten Speicherbehälters der Dosieranlage (71), nach dem Dosiergerät (72), gewährleistet ist, die Kühlung des Dosiergeräts der Dosieranlage (72) und der Ausgangsschleuse der Dosieranlage (73) durch Wasserzufuhr von der Kühleinheit mit Wärmerückgewinnung (58) durch Kühleingänge (84) und Kühlausgänge (85) gewährleistet ist.

7. Die Strukturelle Konfiguration nach einem der Ansprüche 1 - 5, wobei, der schnelle Plasmavergasungsreaktor (16) mindestens das Plasmabrennermodul der Plasmavergasung (74) enthält, das mindestens zwei indirekte Lichtbogen-Plasmabrenner (75), den Schlackenaufheizplasmabrenner (78), einen Ausgang des Dampf-Gas-Gemisches (80), eine Vorrichtung zum Ablassen geschmolzener Schlacke (82), einen Notablassstopfen für Schlacke (83), einen Kühleingang (84) und einen Kühlausgang (85) enthält, im mittleren Teil des schnellen Plasmavergasungsreaktors (16) mindestens ein Plasmabrennermodul der Plasmavergasung (74) eingebaut ist, das kaskadiert in den Körper des schnellen Plasmavergasungsreaktors (16) eingebaut werden kann, im unteren Teil des schnellen Plasmavergasungsreaktors eine Schlackenwanne (77) eingebaut ist, die mindestens zwei indirekte Lichtbogen-Plasmabrenner (75) enthält, an der Seite der Schlackenwanne (77) eine Vorrichtung zum Ablassen geschmolzener Schlacke (82) angebracht ist, die einen Schlackenaufheizplasmabrenner (78) enthält, für den Notablass der Schlacke am Boden der Schlackenwanne (77) ein Notablassstopfen für geschmolzene Schlacke (83) installiert ist, Kühlung von mindestens zwei indirekten Lichtbogen-Plasmabrenner (75), die in mindestens einem Plasmabrennermodul der Plasmavergasung (74) installiert sind, mindestens zwei indirekten Lichtbogen-Plasmabrenner (75), die in einer Schlackenwanne (77) installiert sind, und einem Schlackenaufheizplasmabrenner (78) durch die Wasserversorgung von der Kühleinheit mit Wärmerückgewinnung (58) über Kühleingänge (84) und Kühlausgänge (85) gewährleistet wird, alle indirekten Lichtbogen-Plasmabrenner (75) und (78) nach dem Schema mit "heißer" Kathode und Anode hergestellt sind, die aus binären Karbidverbindungen aus Wolfram-Tantal oder Niob-Hafnium bestehen.

8. Die Strukturelle Konfiguration nach Anspruch 7, wobei, der schnelle Plasmavergasungsreaktor (16) mindestens ein Induktionsmodul der Plasmavergasung (86) enthält, das mindestens einen Hochfrequenzgenerator 27-54 MHz (89) und mindestens einen Induktor (90) sowie eine Plasmainitialisierungselektrode (87) und mindestens einen Eingang von überhitztem Dampf (88) enthält, im mittleren Teil des schnellen Plasmavergasungsreaktors (16) mindestens ein Induktionsmodul der Plasmavergasung (86) angeordnet ist, das kaskadiert in den Körper des schnellen Plasmavergasungsreaktors (16) eingebaut werden kann, eine Plasmainitialisierungselektrode (87) und mindestens ein Eingang von überhitztem Dampf (88) in einem oberen Teil des schnellen Plasmavergasungsreaktors (16) direkt über dem oberen mindestens einen Induktionsmodul der Plasmavergasung (86) angeordnet sind; worin, mindestens ein Hochfrequenzgenerator 27-54 MHz (89) mit dem mindestens einen Induktor (90) verbunden ist, der mindestens einen Induktor (90) mit mindestens einem Schutzschild gegen hochfrequente elektromagnetische Strahlung (92) versehen ist, der Induktor (90) durch Zuführung von Wasser aus einer Kühleinheit mit Wärmerückgewinnung (58) über Kühleingänge (84) und Kühlausgänge (85) gekühlt wird.

9. Die Strukturelle Konfiguration nach einem der Ansprüche 1 - 5, wobei, Luft-Plasma-Dampferzeuger (15) einen indirekten Lichtbogen-Plasmabrenner (75), ein Gehäuse des Luftplasma-Dampferzeugers (93), einen Eingang des Dampf-Luft-Gemisches und der flüchtigen Verbindungen (94), einen Ausgang von überhitztem Dampf (97) und einen Reinwassereingang (98), einen Wasserstandssensor (100), einen Verdampfer (101), einen Verdampferkrümmer (102) und einen Ausgang des Dampf-Luft-Gemisches (103) enthält, im Inneren des Gehäuses des Luft-Plasma-Dampferzeugers (93) der Verdampfer (101) angebracht ist, über dem sich der indirekte Lichtbogen-Plasmabrenner (75) befindet; unten, am Ausgang des Verdampfers (101), sich ein Verdampferkrümmer (102) befindet, im Gehäuse des Luft-Plasma-Dampferzeugers (93) sind die Hochtemperaturzone (95) und die Zone von überhitztem Dampf (96) getrennt sind, zur Kontrolle des Standes von Reinwasser (99), das aus dem Reinwassereingang (98) kommt, sich im Gehäuse des Luft-Plasma-Dampferzeugers (93) ein Wasserstandssensor (100) befindet.

10. Verfahren zur ökologisch sicheren Verarbeitung von festen Abfällen und Biomasse, um den Wirkungsgrad der Elektroenergieerzeugung zu verbessern, bei dem die festen Abfälle und Biomasse geladen, gebrochen, zerkleinert und von ihnen Eisen- und Nichteisenmetalle abgetrennt und als kommerzieller Produkte an externe Verbraucher geliefert werden, und die zerkleinerten festen Abfälle und Biomasse, die von Metallen gereinigt wurden, werden gesammelt, die gesammelten zerkleinerten festen Abfälle und Biomasse, die von Metallen gereinigt wurden, werden dann in den schnellen Plasmavergasungsreaktor (16) auf dosierte Weise zugeführt, in dem schnellen Plasmavergasungsreaktor werden die zerkleinerten festen Abfälle und Biomasse einer schnellen Plasmavergasung unterzogen, worin das Schmelzen erfolgt und sich basaltartige Schlacke bildet, die zu granulierter Schlacke verarbeitet and produziert wird, die gewonnene granulierte Schlacke wird als kommerzielles Produkt an externe Verbraucher geliefert; ein Teil des im ersten Gasbehälter mit konstantem Volumen (29) angesammelten Methans wird zur Erzeugung von Elektroenergie und Wärme verwendet, wobei ein Teil der erzeugten Elektroenergie für den Eigenbedarf und der andere Teil der erzeugten Elektroenergie und Wärme an externe Verbraucher geliefert wird, Kohlendioxid, das aus den bei der Elektroenergie- und Wärmeerzeugung entstehenden Abgasen gewonnen wird, wird komprimiert und akkumulieren; sofern keine Notwendigkeit zur Erzeugung von Elektroenergie und Wärme besteht, wird Elektroenergie für den Eigenbedarf aus einem Teil des angesammelten Methans im ersten Gasbehälter mit konstantem Volumen (29) erzeugt, wobei, feste Abfälle und Biomasse einer Vakuum- und Temperaturtrocknung unterzogen werden, wobei im Zuge der Vakuum- und Temperaturtrocknung eine Vakuumextraktion von flüchtigen Verbindungen und Wasserdampf aus festem Abfall und Biomasse vorsehen, das Dampf Luft-Gemisch und die flüchtigen Verbindungen komprimieren und akkumulieren, anschließend das angesammelte Dampf Luft-Gemisch und die flüchtigen Verbindungen einer Plasmareinigung-Desinfektion unterzogen werden und überhitzter Wasserdampf generiert wird, welcher als plasmabildendes Gas indirekten Lichtbogen-Plasmabrenner (75) im schnellen Plasmavergasungsreaktor (16) zur schnellen Plasmavergasung zugeführt wird, und das im Zuge der Plasmareinigung-Desinfektion gewonnene Dampf Luft-Gemisch kondensiert wird, wobei Wasser aus dem aus festen Abfällen und Biomasse gewonnenen Dampf Luft-Gemisch abgetrennt wird, und die gereinigte und dekontaminierte Luft in die Atmosphäre abgelassen wird.

11. Das Verfahren nach Anspruch 10, wobei, die angesammelten entwässerten, getrockneten, zerkleinerten und die von Metallen gereinigten festen Abfälle und Biomasse in den schnellen Plasmavergasungsreaktor (16) auf dosierte Weisezugeführt werden, wobei, die Ableitung der bei der Dosierungsmethode gebildeten überschüssigen Luft in die Atmosphäre sichergestellt wird, in dem schnellen Plasmavergasungsreaktor die zerkleinerten und die von Metallen gereinigten festen Abfälle und Biomasse, einer schnellen Plasmavergasung unterzogen werden, gleichzeitig das durch die schnelle Plasmavergasung gewonnene Dampf-Gas-Gemisch kondensiert wird, wobei der Wasserdampf aus dem Dampf-Gas-Gemisch abgetrennt wird, und das vom Wasserdampf befreite Gasgemisch in Form von Pyrolysegas nacheinander in zwei Gasbehältern mit veränderlichem Volumen angesammelt wird (22, 23).

12. Das Verfahren nach Anspruch 11, wobei, der durch die Elektrolyse gewonnene Wasserstoff und das Pyrolysegas aus dem ersten der beiden Gasspeicher mit veränderlichem Volumen (22, 23) dem ersten der beiden Sabatier-Rezirkulationsreaktoren (26, 27) für die Durchführung der rezirkulierenden autothermen Sabatier-Reaktion zugeführt werden und das durch die rezirkulierende autotherme Sabatier-Reaktion gewonnene Dampf-Gas-Gemisch, das hauptsächlich Methan enthält, kondensiert wird, wobei Wasserdampf aus dem Dampf-Gas-Gemisch abgetrennt wird, das erhaltene Gasgemisch in dem ersten von zwei Gasbehältern mit veränderlichem Volumen akkumuliert wird, wobei der Zyklus, bestehend aus der Zufuhr von aus der Elektrolyse gewonnenem Wasserstoff und der Zufuhr von Pyrolysegas aus dem ersten von zwei Gasbehältern mit veränderlichem Volumen zu dem ersten von zwei Sabatier-Rezirkulationsreaktoren für die Durchführung der rezirkulierenden autothermen Sabatier-Reaktion, wiederholt wird, bis das Gasgemisch im ersten der beiden Gasbehälter mit veränderlichem Volumen vollständig in Methan umgewandelt und der gesamte erste Gasbehälter mit Methan gefüllt ist, gleichzeitig der Methangehalt im Dampf-Gas-Gemisch bei jedem nächsten Zyklus zunimmt und die Gesamtzeit der Zyklen zur Umwandlung des Gasgemisches in Methan begrenzt ist und durch das Verhältnis der Temperaturparameter der rezirkulierenden autothermen Sabatier-Reaktion und der Parameter der schnellen Plasmavergasung bestimmt wird, nach dem Befüllen des ersten der beiden Gasbehälter mit veränderlichem Volumen mit Methan bestimmt wird, das aus dem ersten der beiden Gasbehälter mit veränderlichem Volumen gewonnene Methan komprimiert und in dem ersten Gasbehälter mit konstantem Volumen akkumulieren wird, während gleichzeitig der aus der Elektrolyse gewonnene Wasserstoff, und das Pyrolysegas aus dem zweiten der beiden Gasbehälter mit veränderlichem Volumen in den zweiten der beiden Sabatier-Rezirkulationsreaktoren für die Durchführung der rezirkulierenden autothermen Sabatier-Reaktion zugeführt wird, das aus der rezirkulierenden autothermen Sabatier-Reaktion resultierende Dampf-Gas-Gemisch, das hauptsächlich Methan enthält, kondensiert wird, wobei Wasserdampf aus dem Dampf-Gas-Gemisch abgeschieden wird, das gewonnene Gasgemisch in dem zweiten von zwei Gasbehältern mit veränderlichem Volumen akkumuliert wird und der Zyklus, bestehend aus der Zufuhr von aus der Elektrolyse gewonnenem Wasserstoff und der Zufuhr von Pyrolysegas aus dem zweiten von zwei Gasbehältern mit veränderlichem Volumen in den zweiten von zwei Sabatier-Rezirkulationsreaktoren für die Durchführung der rezirkulierenden autothermen Sabatier-Reaktion besteht, wiederholt wird, bis die vollständige Umwandlung des Gasgemisches in dem zweiten von zwei Gasbehältern mit veränderlichem Volumen in Methan erfolgt und der gesamte zweite Gasbehälter nicht mit Methan gefüllt wird, gleichzeitig der Methangehalt im Dampf-Gas-Gemisch bei jedem nächsten Zyklus zunimmt und die Gesamtzeit der Zyklen zur Umwandlung des Gasgemisches in Methan begrenzt ist und durch das Verhältnis der Temperaturparameter der rezirkulierenden autothermen Sabatier-Reaktion und der Parameter der schnellen Plasmavergasung bestimmt wird, nach dem Befüllen des zweiten der beiden Gasbehälter mit veränderlichem Volumen mit Methan das aus dem zweiten der beiden Gasbehälter mit veränderlichem Volumen gewonnene Methan komprimiert und gleichzeitig in dem ersten Gasbehälter mit konstantem Volumen akkumuliert wird, die Zyklen der Umwandlung des Pyrolysegases und des Gasgemisches in Methan unter Verwendung der rezirkulierenden autothermen Sabatier-Reaktion im ersten Sabatier-Rezirkulationsreaktor und anschließend im zweiten Sabatier-Rezirkulationsreaktor wiederholt werden und somit unter Verwendung der rezirkulierenden autothermen Sabatier-Reaktion die Kontinuität des technologischen Prozesses der Umwandlung des Pyrolysegases in Methan gewährleistet wird.

13. Verfahren nach Anspruch 12, wobei, das durch Kondensation von Wasserdampf aus dem durch die schnelle Plasmavergasung erhaltenen Dampf-Gas-Gemisch gewonnene Kondensat, das durch Kondensation von Wasserdampf aus dem aus festen Abfällen und Biomasse gewonnenen Dampf-Luft-Gemisch gewonnene Kondensat, das durch Kondensation von Wasserdampf aus dem durch die rezirkulierende autotherme Sabatier-Reaktion im ersten Sabatier-Rezirkulationsreaktor (26) gewonnenen Dampf-Gas-Gemisch gebildete Kondensat, das durch Kondensation von Wasserdampf aus dem durch die rezirkulierende autotherme Sabatier-Reaktion im zweiten Sabatier-Rezirkulationsreaktor (27) gewonnenen Dampf-Gas-Gemisch gebildete Kondensat, sowie das durch Akkumulation von Dampf Luft-Gemisch und flüchtigen Verbindungen gebildete Kondensat durch Alkalidosierung auf den pH-Wert normalisiert werden, wonach eine Membrantrennung des gewonnenen normalisierten Kondensats in Kaliumsalzlösung und Reinwasser erfolgt, die gewonnene Kaliumsalzlösung in den Speicherbehälter zugeführt und angesammelt wird, und dann als Kaliumdünger - kommerzielle Produkte, an externe Verbraucher geliefert wird, Reinwasser ebenfalls akkumuliert wird, dann ein Teil von Reinwasser zur Elektrolyse zugeführt wird, ein anderer Teil von Reinwasser zur Plasmareinigung-Desinfektion und Erzeugung von überhitztem Wasserdampf zugeführt wird, und der verbleibende dritte Teil als kommerzielle Produkte an externe Verbraucher geliefert wird.

14. Verfahren nach einem der Ansprüche 12 oder 13, wobei, die Vakuum- und Temperaturtrocknung durch Wärmeentzug gewährleistet wird, der bei der Kondensation von Wasserdampf aus dem Dampf-Gas-Gemisch, das bei der schnellen Plasmavergasung gewonnen wird, aus dem Dampf Luft-Gemisch, das aus festen Abfällen und Biomasse gewonnen wird, aus dem Dampf-Gas-Gemisch, das bei der rezirkulierenden autothermen Sabatier-Reaktion im ersten Sabatier-Rezirkulationsreaktor (26) gewonnen wird, aus dem Dampf-Gas-Gemisch, das während der rezirkulierenden autothermen Sabatier-Reaktion im zweiten Sabatier-Rezirkulationsreaktor (27) gewonnen wird, sowie durch Wärmeentzug, der im Prozess der Plasmareinigung-Desinfektion des Dampf-Luft-Gemisches und der flüchtigen Verbindungen entsteht, wobei alle diese Wärmequellen in einem einzigen geschlossenen Kühlkreislauf mit Wärmerückgewinnung für die Vakuum- und Temperaturtrocknung kombiniert werden.

15. Verfahren nach einem der Ansprüche 10 - 14, wobei, der als Ergebnis der Elektrolyse gewonnene Sauerstoff in dem dritten Gasbehälter mit veränderlichem Volumen angesammelt wird, der angesammelte Sauerstoff komprimiert und in dem zweiten Gasbehälter mit konstantem Volumen angesammelt wird und dann als kommerzielles Produkt an externe Verbraucher geliefert wird; das angesammelte Methan in dem ersten Gasbehälter mit konstantem Volumen wie folgt verwendet wird: ein Teil des in dem ersten Gasbehälter mit konstantem Volumen (29) angesammelten Methans wird als kommerzielles Produkt verwendet und an externe Verbraucher geliefert, und der andere Teil des im ersten Gasbehälter mit konstantem Volumen angesammelten Methans für die Elektroenergie- und Wärmeerzeugung verwendet wird, das angesammelte Kohlendioxid, das aus den während der Elektroenergie- und Wärmeerzeugung oder nur während der Elektroenergieerzeugung erzeugten Abgasen extrahiert wird, dazu dient, den Luftzutritt zu begrenzen, während die festen Abfälle und die Biomasse in den schnellen Plasmavergasungsreaktor auf dosierte Weise zugeführt werden, um eine schnelle Plasmavergasung sicherzustellen.

16. Verfahren nach einem der Ansprüche 10 - 15, wobei, sofern keine Notwendigkeit zur Erzeugung von Elektroenergie und Wärme besteht, aus einem Teil des im ersten Gasbehälter mit konstantem Volumen (29) angesammelten Methans Elektroenergie für den Eigenbedarf erzeugt wird und der andere Teil des im ersten Gasbehälter mit konstantem Volumen angesammelten Methans als kommerzielles Produkt verwendet und an externe Verbraucher geliefert wird.

17. Verfahren nach einem der Ansprüche 10 - 16, wobei, indirekte Lichtbogen-Plasmabrenner nach dem Schema mit "heißer" Kathode und Anode hergestellt werden, bei denen binäre Karbidverbindungen aus Wolfram-Tantal oder Niob-Hafnium als Materialien für die Herstellung von Anoden und Kathoden verwendet werden.

## Revendications

1. La configuration structurale de traitement sécurisé pour l'environnement des déchets solides et de la biomasse afin d'améliorer l'efficacité de la production d'énergie électrique, comprend une unité de préparation des déchets solides et de la biomasse (57) comprenant un système de chargement et de broyage des déchets solides et de la biomasse (2), un système de déchiquetage des déchets solides et de la biomasse (4), un système de séparation des métaux (5), un réservoir de stockage de déchets solides déchiquetés et de biomasse (8), un système d'alimentation en déchets solides déchiquetés et de biomasse (9) et un dégagement d'air (11) vers l'atmosphère ; où l'entrée du système de chargement et de broyage des déchets solides et de la biomasse (2) est également l'entrée de traitement de déchets solides et de biomasse (1) de l'unité de préparation des déchets solides et de la biomasse (57) ; où la sortie du système de déchiquetage des déchets solides et de la biomasse (4) est reliée à l'entrée du système de séparation des métaux (5), et la première sortie de l'unité de séparation des métaux (5) est reliée à l'entrée de l'accumulateur de déchets solides déchiquetés et de biomasse (8), la deuxième sortie du système de séparation des métaux (5) est la sortie de produits commercialisables en métaux ferreux (6), et est également la première sortie de l'unité de préparation des déchets solides et de la biomasse (57), la troisième sortie du système de séparation des métaux (5) est la sortie des produits métalliques non ferreux (7), et est également la deuxième sortie de l'unité de préparation des déchets solides et de la biomasse (57) ; où la première sortie de l'unité de préparation des déchets solides et de la biomasse (57) est également la sortie de produits commercialisables en métaux ferreux de la configuration structurale, la deuxième sortie de l'unité de préparation des déchets solides et de la biomasse (57) est également la sortie de produits métalliques non ferreux de la configuration structurale ; la sortie du réservoir de stockage de déchets solides déchiquetés et de biomasse (8) est connectée à l'entrée du système d'alimentation en déchets solides déchiquetés et de biomasse (9) ; où la configuration structurale comprend également une unité de gazéification à plasma rapide (59) contenant un dégagement de l'air purifié et décontaminé (21) dans l'atmosphère et un système de collection et de granulation des scories (17), la sortie du système de collection et de granulation des scories (17) est une sortie de scories granulées (18) et est également une première sortie de l'unité de gazéification à plasma rapide (59),la première sortie de l'unité de gazéification à plasma rapide (59) est également la sortie de scories granulées de la configuration structurale ; la configuration structurale comprend en outre une unité de génération d'énergie électrique et de chaleur (63) comprenant au moins un système de génération d'énergie électrique et de chaleur (44) ou un système de production d'énergie électrique pour les besoins propres (50), et également au moins un système de refroidissement des gaz d'échappement (47), au moins un tuyau d'échappement de gaz (48) et une génératrice de secours (49), où la première sortie d'au moins un système de génération d'énergie électrique et de chaleur (44) est également une première sortie de l'unité de production d'énergie et de chaleur (63), dont la première sortie est également une première sortie de connexion pour les consommateurs d'énergie externes de la configuration structurale, la deuxième sortie d'au moins un système de génération d'énergie électrique et de chaleur (44) est également une deuxième sortie de l'unité de génération d'énergie électrique et de chaleur (63), dont la deuxième sortie est également une deuxième sortie de connexion pour les consommateurs de chaleur externes de la configuration structurale, la deuxième sortie d'au moins un système de génération d'énergie électrique et de chaleur (44) est également une deuxième sortie de l'unité de génération d'énergie électrique et de chaleur (63), dont la deuxième sortie est également une deuxième sortie de connexion pour les consommateurs de chaleur externes de la configuration structurale, la troisième sortie d'au moins un système de génération d'énergie électrique et de chaleur (44) est connectée à au moins un système de refroidissement des gaz d'échappement (47), la sortie d'au moins un système de refroidissement des gaz d'échappement (47) est également une troisième sortie de l'unité de génération d'énergie électrique et de chaleur (63), la première entrée de l'unité de génération d'énergie électrique et de chaleur (63) est également la première entrée de l'au moins un système de génération d'énergie électrique et de chaleur (44) ; où la configuration structurale comprend en outre une unité de capture du dioxyde de carbone (64) comprenant un système de capture du dioxyde de carbone (51), un troisième système de compression (52), un troisième gazomètre à volume constant (53) et une batterie de secours des bouteilles de dioxyde de carbone (54), où la troisième sortie de l'unité de génération d'énergie électrique et de chaleur (63) est connectée à l'entrée de l'unité de capture du dioxyde de carbone (64), dont l'entrée est également l'entrée du système de capture de dioxyde de carbone (51), la première sortie du système de capture de dioxyde de carbone (51) est connectée via le troisième système de compression (52) à l'entrée du troisième gazomètre à volume constant (53), dont la sortie est réunie avec à la sortie de la batterie de secours des bouteilles de dioxyde de carbone (54) et est également la première sortie de l'unité de capture du dioxyde de carbone (64),la deuxième sortie du système de capture de dioxyde de carbone (51), qui est également une deuxième sortie de l'unité de capture du dioxyde de carbone (64) à laquelle est raccordée une entrée d'au moins un tuyau d'échappement de gaz (48) de l'unité de génération d'énergie électrique et de chaleur (63), l'entrée d'au moins un tuyau d'échappement de gaz (48) est également une deuxième entrée de l'unité de génération d'énergie électrique et de chaleur (63), et la sortie d'au moins un tuyau d'échappement de gaz (48) est également une quatrième sortie de l'unité de génération d'énergie électrique et de chaleur (63), par ailleurs la configuration structurale comprend en outre une unité de contrôle et de surveillance du procédé technologique (65) contenant un système de surveillance et de contrôle du procédé technologique (55) et au moins un dispositif de contrôle des émissions dans l'environnement (56) et ayant des communications bidirectionnelles avec d'autres unités de la configuration, la sortie d'au moins un tuyau d'échappement de gaz (48) étant reliée à une entrée de l'unité de contrôle et de surveillance du procédé technologique (65), l'entrée d'au moins un système de contrôle des émissions dans l'environnement (56) est également l'entrée de l'unité de contrôle et de surveillance du procédé technologique (65) ; où, en l'absence de nécessité de produire de l'électricité et de la chaleur, l'unité de génération d'énergie électrique et de chaleur (63) comprend un système de production d'énergie électrique pour les besoins propres (50) au lieu du système de génération d'énergie électrique et de chaleur (44), où l'entrée du système de production d'énergie électrique pour les besoins propres (50) est également la première entrée de l'unité de génération d'énergie électrique et de chaleur (63), et la sortie du système de production d'énergie électrique pour les besoins propres (50) est connectée à l'entrée d'au moins un système de refroidissement des gaz d'échappement (47) ; où la configuration structurale comprend également une unité de refroidissement avec récupération de chaleur (58), une unité de conversion de gaz (60), une unité de traitement des condensats (61) et une unité hydrogène-oxygène (62) ; où l'unité de préparation des déchets solides et de la biomasse (57) comprend en outre un système de séchage sous vide et à température (3), un système de dosage des déchets solides et de la biomasse (10) et une pompe à vide (12), la sortie du système d'alimentation en déchets solides déchiquetés et de biomasse (9) est connectée à la première entrée du système de dosage des déchets solides et de la biomasse (10), dont la première sortie est également la quatrième sortie de l'unité de préparation des déchets solides et de la biomasse (57), qui est connecté à la première entrée de l'unité de gazéification à plasma rapide (59) ; où l'unité de gazéification à plasma rapide (59) comprend en outre un compresseur (13), un réservoir récepteur à haute pression (14), un générateur de vapeur air-plasma (15), un réacteur de gazéification à plasma rapide (16), un premier condenseur (19) et un deuxième condenseur (20), la première entrée de l'unité de gazéification à plasma rapide (59) est également la deuxième entrée du réacteur de gazéification à plasma rapide (16) ; la sortie du système de chargement et de broyage des déchets solides et de la biomasse (2) est reliée à la première entrée du système de séchage sous vide et à température (3), dont la première sortie est reliée à l'entrée du système de déchiquetage des déchets solides et de la biomasse (4), et la deuxième sortie du système de séchage sous vide et à température (3) est connectée à l'entrée de la pompe à vide (12), la deuxième entrée du système de séchage sous vide et à température (3) est reliée à la deuxième sortie du système de dosage des déchets solides et de la biomasse (10), dont la troisième entrée est également la première entrée de l'unité de préparation des déchets solides et de la biomasse (57), la deuxième entrée du système de dosage des déchets solides et de la biomasse (10) est également la deuxième entrée de l'unité de préparation des déchets solides et de la biomasse (57) et est connectée à la première sortie de l'unité de capture du dioxyde de carbone (64),la troisième sortie du système de dosage des déchets solides et de la biomasse (10) est également la sixième sortie de l'unité de préparation des déchets solides et de la biomasse (57), dont la cinquième sortie est également la troisième sortie du système de séchage sous vide et à température (3), la sixième sortie de l'unité de préparation des déchets solides et de la biomasse (57) est également la sortie du dégagement d'air (11) vers l'atmosphère de la configuration structurale, la sortie de la pompe à vide (12) est également la troisième sortie de l'unité de préparation des déchets solides et de la biomasse (57) et est connectée à la deuxième entrée de l'unité de gazéification à plasma rapide (59) ; où la deuxième entrée de l'unité de gazéification à plasma rapide (59) est également l'entrée d'un compresseur (13), dont la sortie est reliée à l'entrée d'un réservoir récepteur à haute pression (14), la première sortie du réservoir récepteur à haute pression 14 étant reliée à la première entrée d'un générateur de vapeur air-plasma (15), dont la première sortie est connectée à la première entrée du réacteur de gazéification à plasma rapide (16), la deuxième sortie du générateur de vapeur air-plasma (15) est reliée à la première entrée du premier condenseur (19), dont la troisième sortie est également la septième sortie de l'unité de gazéification à plasma rapide (59), la septième sortie de l'unité de gazéification à plasma rapide (59) est également la sortie du dégagement de l'air purifié et décontaminé (21) dans l'atmosphère de la configuration, la deuxième sortie du premier condenseur (19) de l'unité est raccordée à la troisième entrée du générateur de vapeur air-plasma (15), dont la troisième sortie est également une sixième sortie de l'unité de gazéification à plasma rapide (59), la première sortie du réacteur de gazéification à plasma rapide (16) est connectée à une première entrée du deuxième condenseur (20), dont la troisième sortie est connectée à une deuxième entrée du premier condenseur (19), la troisième sortie du réacteur de gazéification à plasma rapide (16) est connectée à une deuxième entrée du deuxième condenseur (20),dont la première sortie est également la deuxième sortie de l'unité de gazéification à plasma rapide (59), l'entrée du système de collection et de granulation des scories (17) est connectée à la deuxième sortie du réacteur de gazéification à plasma rapide (16), dont la troisième entrée est également la quatrième entrée de l'unité de gazéification à plasma rapide (59), la deuxième sortie du réservoir récepteur à haute pression (14) est également la troisième sortie de l'unité de gazéification à plasma rapide (59), dont la quatrième sortie est également la première sortie du premier condensateur (19), la deuxième sortie du deuxième condenseur (20) est également la cinquième sortie de l'unité de gazéification à plasma rapide (59), dont la troisième entrée est également la deuxième entrée du générateur de vapeur air-plasma (15).

2. La configuration structurale visée à la revendication 1, où l'unité de conversion de gaz (60) comprend un premier gazomètre à volume variable (22), un deuxième gazomètre à volume variable (23), un troisième condenseur (24), un quatrième condenseur (25), un premier réacteur Sabatier à recirculation (26), un deuxième réacteur Sabatier à recirculation (27), un premier système de compression (28) et un premier gazomètre à volume constant (29), la première entrée du premier réservoir de gaz à volume variable (22) est également la première entrée de l'unité de conversion de gaz (60), dont la seconde entrée est également la première entrée du deuxième gazomètre à volume variable (23),la première et la deuxième entrée de l'unité de conversion de gaz (60) sont reliées à la deuxième sortie de l'unité de gazéification à plasma rapide (59), la première sortie du premier gazomètre à volume variable (22) est reliée à la première entrée du premier réacteur Sabatier à recirculation (26), dont la sortie est reliée à la première entrée du troisième condenseur (24), dont la première sortie est reliée à la deuxième entrée du premier gazomètre à volume variable (22), la première sortie du deuxième support de gaz à volume variable (23) est reliée à une première entrée d'un deuxième réacteur Sabatier à recirculation (27), dont la sortie est reliée à une première entrée d'un quatrième condenseur (25), dont la première sortie est reliée à une deuxième entrée du deuxième gazomètre à volume variable (23),la cinquième entrée de l'unité de conversion de gaz (60) est également la deuxième entrée du quatrième condenseur (25), dont la troisième sortie est connectée à la deuxième entrée du troisième condenseur (24), dont la troisième sortie est également la cinquième sortie de l'unité de conversion de gaz (60), la deuxième sortie du troisième condenseur (24) est également la troisième sortie de l'unité de conversion de gaz (60), dont la quatrième sortie est également la deuxième sortie du deuxième condenseur (25), la deuxième entrée du premier réacteur Sabatier à recirculation (26) est également la troisième entrée de l'unité de conversion de gaz (60),dont la quatrième entrée est également la deuxième entrée du deuxième réacteur Sabatier à recirculation (27), la deuxième sortie du premier gazomètre à volume variable (22) et la deuxième sortie du deuxième gazomètre à volume variable (23) sont combinées et reliées via le premier système de compression (28) à l'entrée du premier gazomètre à volume constant (29), la première entrée de l'unité de génération d'énergie électrique et de chaleur (63) est connectée à la première sortie de l'unité de conversion de gaz (60), dont la première sortie est également la première sortie du premier gazomètre à volume constant (29), la deuxième sortie du premier gazomètre à volume constant (29) est également la deuxième sortie de l'unité de conversion de gaz (60), dont la deuxième sortie est également la sortie du produit commercialisable de méthane (30) de la configuration structurale.

3. La configuration structurale décrite dans les revendications 1 ou 2, où l'unité de traitement des condensats (61) comprend un système de normalisation du condensat (31), un distributeur d'alcali (32), une système de séparation par membrane de solution de sels de potassium et de l'eau purifiée (33), un réservoir de stockage d'eau purifiée (34), un système d'alimentation en solution de sels de potassium (36) et un réservoir de stockage de la solution de sels de potassium (37), la troisième sortie de l'unité de gazéification à plasma rapide (59) est connectée à une première entrée de l'unité de traitement des condensats (61), dont la première entrée est également la première entrée du système de normalisation du condensat (31), la quatrième sortie de l'unité de gazéification à plasma rapide (59) est connectée à une deuxième entrée de l'unité de traitement des condensats (61), dont la deuxième entrée est également la deuxième entrée du système de normalisation du condensat (31), la cinquième sortie de l'unité de gazéification à plasma rapide (59) est connectée à la troisième entrée de l'unité de traitement des condensats (61), dont la troisième entrée est également la troisième entrée du système de normalisation du condensat (31), la troisième sortie de l'unité de conversion de gaz (60) est connectée à la quatrième entrée de l'unité de traitement des condensats (61), dont la quatrième entrée est également la quatrième entrée du système de normalisation du condensat (31), la quatrième sortie de l'unité de conversion de gaz (60) est connectée à la cinquième entrée de l'unité de traitement des condensats (61), dont la cinquième entrée est également la cinquième entrée du système de normalisation du condensat (31),la sortie du distributeur d'alcali (32) est reliée à la sixième entrée du système de normalisation du condensat (31), dont la sortie est reliée à l'entrée du système de séparation par membrane de solution de sels de potassium et de l'eau purifiée (33), la première sortie du système de séparation par membrane de solution de sels de potassium et de l'eau purifiée (33) étant reliée à l'entrée du réservoir de stockage d'eau purifiée (34), la deuxième sortie du système de séparation par membrane de solution de sels de potassium et de l'eau purifiée (33) est reliée, via le système d'alimentation en solution de sels de potassium (36), à l'entrée du réservoir de stockage de la solution de sels de potassium (37), la sortie du réservoir de stockage de la solution de sels de potassium (37) étant également la première sortie de l'unité de traitement des condensats (61), dont la première sortie est également la sortie du produit commercialisable de la solution de sels de potassium (38) de la configuration structurale, la troisième entrée de l'unité de gazéification à plasma rapide (59) est reliée à la deuxième sortie de l'unité de traitement des condensats (61), dont la deuxième sortie est également la première sortie du réservoir de stockage de l'eau purifiée (34), la deuxième sortie de l'unité de stockage d'eau purifiée (34) est également une troisième sortie de l'unité de traitement des condensats (61), dont la troisième sortie est également une sortie d'un produit commercialisable d'eau purifiée (35) de la configuration structurale, la troisième sortie du réservoir de stockage de d'eau purifiée (34) étant également une quatrième sortie de l'unité de traitement des condensats (61).

4. La configuration structurale décrite dans les revendications 1 à 3, où l'unité hydrogène-oxygène (62) comprend un électrolyseur (39), un troisième gazomètre à volume variable (40), un deuxième système de compression (41) et un deuxième gazomètre à volume constant (42), la quatrième sortie de l'unité de traitement des condensats (61) est reliée à la première entrée de l'unité hydrogène-oxygène (62), dont la première entrée est également l'entrée de l'électrolyseur (39), la première sortie de l'électrolyseur (39) étant reliée, via un troisième gazomètre à volume variable (40) et un deuxième système de compression (41), à l'entrée d'un deuxième gazomètre à volume constant (42),la sortie du deuxième gazomètre à volume constant (42) est également la première sortie de l'unité hydrogène-oxygène (62), dont la première sortie est également la sortie du produit commercialisable d'oxygène(43) de la configuration structurale, les troisième et quatrième entrées de l'unité de conversion de gaz (60) sont connectées à la deuxième sortie de l'unité hydrogène-oxygène (62), dont la deuxième sortie est également la deuxième sortie de l'électrolyseur (39).

5. La configuration structurale décrite dans les revendications 2 à 4, où l'entrée de l'unité de refroidissement avec récupération de chaleur (58) est connectée à la sixième sortie de l'unité de gazéification à plasma rapide (59), la sortie de l'unité de refroidissement avec récupération de chaleur (58) est connectée à la première entrée de l'unité de préparation des déchets solides et de la biomasse (57), dont la cinquième sortie est connectée à la cinquième entrée de l'unité de conversion de gaz (60), dont la cinquième sortie est connectée à la quatrième entrée de l'unité de gazéification à plasma rapide (59).

6. La configuration structurale selon l'une quelconque des revendications 1 à 5, où le système de dosage des déchets solides et de la biomasse (10) comprend une entrée de chargement pour les déchets solides déchiquetés et la biomasse (66), un piston du dispositif de dosage (68), une soupape d'air (69), une entrée de dioxyde de carbone (70), un réservoir de stockage du système de dosage (71), un doseur du système de dosage (72), un sas de sortie du système de dosage (73), une entrée de refroidissement (84) et une sortie de refroidissement (85), un piston du système de dosage (68) avec une soupape d'air (69) est installé dans la partie supérieure du réservoir de stockage du système de dosage (71), et un doseur du système de dosage (72) est installé au fond à la sortie du réservoir de stockage du système de dosage (71), le chargement synchrone des déchets solides déchiquetés et de la biomasse pour la gazéification à plasma rapide dans le réacteur de gazéification à plasma rapide (16) est assuré par le sas de sortie du système de dosage (73) installé également dans la partie inférieure du réservoir de stockage du système de dosage (71), après le doseur du système de dosage (72), le refroidissement du doseur du système de dosage (72) et du sas de sortie du système de dosage (73) est assuré par l'alimentation en eau de l'unité de refroidissement avec récupération de chaleur (58) à travers les entrées (84) et les sorties (85) de refroidissement.

7. La configuration structurale selon l'une quelconque des revendications 1 à 5, où le réacteur de gazéification à plasma rapide (16) comprend au moins un module de torche à plasma de gazéification à plasma (74), comprenant au moins deux torches à plasma à arc indirect (75), une torche à plasma de chauffage de scories (78), une sortie du mélange vapeur-gaz (80), un dispositif pour drainer les scories fondues (82), un bouchon de vidange d'urgence des scories (83), une entrée de refroidissement (84) et une sortie de refroidissement (85), dans la partie médiane du réacteur de gazéification à plasma rapide (16) se trouve au moins un module de torche à plasma de gazéification à plasma (74), qui peut être mis en cascade dans le boîtier du réacteur de gazéification à plasma rapide (16), dans la partie inférieure du réacteur de gazéification à plasma rapide se trouve un bain de scories (77) comprenant au moins deux torches à plasma à arc indirect (75) ; sur le côté du bain de scories (77) est installé un dispositif pour drainer les scories fondues (82), qui contient une torche à plasma de chauffe des scories (78), pour le vidange d'urgence des scories dans la partie inférieure du bain de scories (77) est installé un bouchon de vidange d'urgence des scories (83),le refroidissement d'au moins deux torches à plasma à arc indirect (75) installés dans au moins un module de torche à plasma de gazéification à plasma (74), d'au moins deux torches à plasma à arc indirect (75) installés dans un bain de scories (77) et d'une torche à plasma de chauffage de scories (78), est assuré par l'alimentation en eau provenant de l'unité de refroidissement avec récupération de chaleur (58) à travers les entrées (84) et les sorties (85) de refroidissement, toutes les torches à plasma à arc indirect (75) et (78) sont fabriquées selon le schéma avec une cathode et une anode « chaudes », qui sont constituées de composés carburés binaires de tungstène-tantale ou de niobium-hafnium.

8. La configuration structurale selon la revendication 7, où le réacteur de gazéification à plasma rapide (16) comprend au moins un module d'induction de gazéification du plasma (86), comprenant au moins un générateur haute fréquence 27-54 MHz (89) et au moins un inducteur (90), ainsi qu' une électrode d'initialisation du plasma (87) et au moins une entrée de vapeur surchauffée (88), au moins un module d'induction de gazéification du plasma (86) est disposé dans une partie médiane du réacteur de gazéification rapide à plasma (16), qui peut être mis en cascade dans le boîtier du réacteur de gazéification à plasma rapide (16), une électrode d'initialisation du plasma (87) et au moins une entrée de vapeur surchauffée (88) sont disposées dans une partie supérieure du réacteur de gazéification à plasma rapide (16), immédiatement au-dessus du haut de, au moins, un module d'induction de la gazéification du plasma (86) ; dans la configuration structurale où au moins un générateur haute fréquence 27-54 MHz (89) est connecté à au moins un inducteur (90), au moins un inducteur (90) est pourvu d'au moins un écran de protection contre les rayonnements électromagnétiques haute fréquence (92), et l'inducteur (90) est refroidi par l'alimentation en eau provenant de l'unité de refroidissement avec récupération de chaleur (58) via les entrées (84) et les sorties (85) de refroidissement.

9. La configuration structurale selon l'une quelconque des revendications 1 à 5, où le générateur de vapeur air-plasma (15) comprend une torche à plasma à arc indirect (75), un boîtier du générateur de vapeur air-plasma (93), une entrée du mélange vapeur-air et des composés volatils (94), une sortie de vapeur surchauffée (97), une entrée d'eau purifiée (98), un capteur de niveau d'eau (100), un évaporateur (101), une collecteur d'évaporateur (102) et une sortie du mélange de vapeur-air (103), à l'intérieur du boîtier du générateur de vapeur air-plasma (93) est installé un évaporateur (101), au-dessus duquel se trouve une torche à plasma à arc indirect (75) ; en bas, à la sortie de l'évaporateur (101) se trouve un collecteur de l'évaporateur (102), dans le corps du générateur de vapeur air-plasma (93) sont séparées la zone à haute température (95) et la zone de vapeur surchauffée (96), pour contrôler le niveau d'eau purifiée (99) provenant de l'entrée d'eau purifiée (98), un capteur de niveau d'eau (100) est intégré dans le boîtier du générateur de vapeur air-plasma (93).

10. Méthode de traitement écologique des déchets solides et de la biomasse pour améliorer l'efficacité de la production d'énergie électrique, au cours de laquelle les déchets solides et la biomasse sont chargés, broyés, déchiquetés et séparés en métaux ferreux et non ferreux et les métaux sont fournis sous forme de produits commercialisables à des consommateurs externes, les déchets solides et la biomasse déchiquetés, exempts de métaux sont accumulés, les déchets solides et la biomasse déchiquetés accumulés et exempts de métaux sont ensuite transmis d'une manière dosée dans un réacteur de gazéification à plasma rapide, les déchets solides et la biomasse déchiquetés sont soumis à une gazéification à plasma rapide, au cours de laquelle une fusion a lieu et un laitier de type basalte est formé, que nous traitons et produisons des scories granulées, et que nous fournissons les scories granulées résultant en tant que produit commercialisable à des consommateurs externes ; nous utilisons une partie du méthane accumulé dans le premier gazomètre à volume constant (29) pour produire de l'énergie électrique et de la chaleur, tout en fournissant une partie de d'énergie électrique produite pour nos propres besoins et l'autre partie de d'énergie électrique et de la chaleur produites pour des consommateurs externes, nous comprimons et stockons le dioxyde de carbone extrait des gaz d'échappement générés lors de la production d'énergie électrique et de chaleur ; en l'absence de besoin de produire de l'énergie électrique et de la chaleur, nous produisons de l'énergie électrique pour nos propres besoins à partir d'une partie du méthane accumulé dans le premier gazomètre à volume constant (29), où les déchets solides et la biomasse sont soumis à un séchage sous vide et à température, en même temps, dans le processus de séchage sous vide et à température, nous assurons l'extraction sous vide des composés volatils et de la vapeur d'eau des déchets solides et de la biomasse, la compression et l'accumulation du mélange vapeur-air et des composés volatils, le mélange vapeur-air accumulé et les composés volatils sont ensuite soumis à un nettoyage-décontamination à plasma et génèrent de la vapeur d'eau surchauffée qui, en tant que gaz plasmagène, est fourni dans des torche à plasma à arc indirect (75), dans le réacteur de gazéification à plasma rapide (16) pour la mise en oeuvre de la gazéification à plasma rapide, et le mélange vapeur-air obtenu lors du processus de nettoyage-décontamination à plasma est condensé, séparant l'eau du mélange vapeur-air extrait des déchets solides et de la biomasse, et l'air purifié et décontaminé est dégagé dans l'atmosphère.

11. La méthode selon la revendication 10, où les déchets solides et la biomasse accumulés, déshydratés, séchés et déchiquetés exempts de métaux sont transmis d'une manière dosée dans le réacteur de gazéification à plasma rapide (16), tout en assurant que l'excès d'air généré dans la méthode de dosage soit évacué dans l'atmosphère, dans le réacteur de gazéification à plasma rapide, nous soumettons les déchets solides et la biomasse déchiquetés et exempts de métaux à une gazéification à plasma rapide, le mélange gaz-vapeur obtenu à la suite de la gazéification à plasma rapide est condensé, séparant la vapeur d'eau du mélange gaz-vapeur le mélange gazeux exempt de la vapeur d'eau, sous la forme de gaz de pyrolyse, est accumulé successivement dans deux gazomètres à volume variable (22,23).

12. La méthode selon la revendication 11, où l'hydrogène obtenu par électrolyse et également le gaz de pyrolyse provenant du premier des deux gazomètre à volume variable (22,23) sont acheminés vers le premier des deux réacteurs Sabatier à recirculation (26,27) pour la réaction de Sabatier autothermique à recirculation, le mélange gaz-vapeur obtenu à la suite de la réaction de Sabatier autothermique à recirculation, contenant principalement du méthane, est condensé, séparant la vapeur d'eau du mélange gaz-vapeur, le mélange gazeux obtenu est accumulé dans le premier des deux gazomètres à volume variable, le cycle comprenant l'alimentation en hydrogène obtenu par électrolyse et l'alimentation en gaz de pyrolyse du premier des deux gazomètres à volume variable vers le premier des deux réacteurs Sabatier à recirculation pour la réaction de Sabatier autothermique à recirculation , répéter jusqu'à ce que la conversion complète du mélange de gaz en méthane dans le premier des deux gazomètres à volume variable se produise et que le premier gazomètre soit entièrement rempli de méthane, en même temps, la teneur en méthane du mélange gaz-vapeur augmentera à chaque cycle successif, étant précisé que la durée totale de l'exécution des cycles de conversion du mélange gazeux en méthane est limitée et déterminée par le rapport entre les paramètres de température de la réaction de Sabatier autothermique à recirculation et les paramètres de la gazéification à plasma rapide, après le remplissage en méthane du premier des deux gazomètres à volume variable, le méthane provenant du premier des deux gazomètres à volume variable est comprimé et stocké dans le premier gazomètre à volume constant, en même temps, l'hydrogène obtenu par électrolyse et le gaz de pyrolyse provenant du second des deux gazomètres à volume variable sont acheminés vers le second des deux réacteurs Sabatier à recirculation pour la réaction de Sabatier autothermique à recirculation, le mélange gaz-vapeur obtenu à la suite de la réaction de Sabatier autothermique à recirculation, contenant principalement du méthane, est condensé, séparant la vapeur d'eau du mélange gaz-vapeur, le mélange gazeux obtenu est accumulé dans le deuxième des deux gazomètres à volume variable, où le cycle consiste à fournir de l'hydrogène produit par électrolyse et à fournir du gaz de pyrolyse à partir du deuxième des deux gazomètres à volume variable à un deuxième des deux réacteurs Sabatier à recirculation pour effectuer une réaction de Sabatier autothermique à recirculation, cette opération est répétée jusqu'à ce que la conversion complète du mélange de gaz en méthane situé dans le deuxième des deux gazomètres à volume variable se produise et que le deuxième gazomètre ne soit pas entièrement rempli de méthane, dans ce cas, la teneur en méthane du mélange gaz-vapeur augmente à chaque cycle successif, étant précisé que la durée totale des cycles de conversion du mélange gazeux en méthane est limitée et déterminée par le rapport entre les paramètres de température de la réaction de Sabatier autothermique à recirculation et les paramètres de la gazéification à plasma rapide, après avoir rempli de méthane le deuxième des deux gazomètres à volume variable, le méthane obtenu dans le deuxième des deux gazomètres à volume variable est comprimé et accumulé dans le premier réservoir de gaz à volume constant, en même temps, les cycles de conversion du gaz de pyrolyse et du mélange de gaz en méthane au moyen de la réaction de Sabatier autothermique à recirculation sont répétés dans le premier réacteur de recirculation Sabatier, puis dans le deuxième réacteur Sabatier à recirculation, et ainsi, en utilisant la réaction de Sabatier autothermique à recirculation, nous assurons la continuité du processus technologique de conversion du gaz de pyrolyse en méthane.

13. La méthode selon la revendication 12, où le condensat obtenu par condensation de la vapeur d'eau du mélange gaz-vapeur obtenu lors de la gazéification à plasma rapide, le condensat obtenu par condensation de la vapeur d'eau du mélange vapeur-air extrait des déchets solides et de la biomasse, le condensat obtenu par condensation de la vapeur d'eau du mélange gaz-vapeur obtenu lors de la réaction de Sabatier autothermique à recirculation dans le premier réacteur Sabatier à recirculation (26), le condensat obtenu par condensation de la vapeur d'eau du mélange gaz-vapeur obtenu lors de la réaction de Sabatier autothermique à recirculation dans le deuxième réacteur Sabatier à recirculation (27), et également les condensat formés par l'accumulation du mélange vapeur-air et des composés volatils sont normalisés en termes de pH au moyen d'un dosage d'alcali, après ceci, nous assurons la séparation par membrane du condensat normalisé obtenu en solution de sel de potassium et en eau purifiée, la solution de sels de potassium obtenue est acheminée vers le réservoir de stockage et accumulée, puis sous forme d'engrais potassiques - produits commercialisables, fournis aux consommateurs externes, l'eau purifiée est également accumulée, puis une partie de l'eau purifiée est acheminée pour l'exécution de l'électrolyse, une autre partie de l'eau traitée est fournie pour assurer le traitement-désinfection à plasma et la génération de vapeur d'eau surchauffée, et le tiers restant est fourni à des consommateurs externes en tant que produit commercialisable.

14. La méthode selon l'une quelconque des revendications 12 ou 13, où l'on réalise un séchage sous vide et en température en extrayant la chaleur obtenue par condensation de la vapeur d'eau du mélange gaz-vapeur obtenu par gazéification à plasma rapide, du mélange vapeur-air extrait des déchets solides et de la biomasse, du mélange gaz-vapeur obtenu par réaction de Sabatier autothermique à recirculation dans le premier réacteur Sabatier à recirculation (26), du mélange gaz-vapeur obtenu par la réaction de Sabatier autothermique à recirculation dans le deuxième réacteur Sabatier à recirculation (27), et obtenu également par l'extraction de la chaleur formée lors du processus de nettoyage-désinfection à plasma du mélange vapeur-air et des composés volatils ; ainsi, toutes ces sources de chaleur sont combinées en un seul système de refroidissement fermé avec récupération de la chaleur pour le séchage sous vide et à température.

15. La méthode selon l'une quelconque des revendications 10 à 14, où l'oxygène obtenu par en résultat de l'électrolyse est accumulé dans un troisième gazomètre à volume variable, que l'oxygène accumulé est comprimé et accumulé dans un deuxième gazomètre à volume constant, et qu'il est ensuite fourni à des consommateurs externes en tant que produit commercialisable ; le méthane accumulé dans le premier gazomètre à volume constant est utilisé comme suit : une partie du méthane accumulé dans le premier gazomètre à volume constant (29) est utilisée comme produit commercialisable et fournie à des consommateurs externes, et l'autre partie du méthane accumulé dans le premier gazomètre à volume constant est utilisée pour produire de d'énergie électrique et de la chaleur, le dioxyde de carbone stocké extrait des gaz d'échappement provenant de la production d'énergie électrique et de chaleur ou de la production d'énergie électrique seule est canalisé pour restreindre l'accès à l'air lorsque des déchets solides et la biomasse sont introduits d'une manière dosée dans le réacteur de gazéification à plasma rapide afin de permettre la gazéification à plasma rapide.

16. La méthode selon l'une quelconque des revendications 10 à 15, où l'absence de besoin de produire de d'énergie électrique et de la chaleur, nous produisons de d'énergie électrique pour nos propres besoins à partir d'une partie du méthane accumulé dans le premier gazomètre à volume constant (29), et que l'autre partie du méthane accumulé dans le premier gazomètre à volume constant est utilisée comme produit commercialisable et fournie à des consommateurs externes.

17. La méthode selon l'une quelconque des revendications 10 à 16, où les torches à plasma à arc indirect sont fabriquées selon un schéma avec une cathode et une anode « chaudes », où nous utilisons des composés carburés binaires de tungstène-tantale ou de niobium-hafnium comme matériaux pour la production d'anodes et de cathodes.
